# EUROPEAN PATENT APPLICATION

(11) **EP 4 742 785 A1**
(43) Date of publication of application: **13.05.2026**
(21) Application number: 24847935.4
(22) Date of filing: 04.07.2024
(51) Int. Cl.: H04W 64/00

(54) **LOCATION MANAGEMENT METHOD AND APPARATUS**

(30) Priority: 31.07.2023 CN 202310952525
(71) Applicant: Huawei Technologies Co., Ltd., Shenzhen, Guangdong 518129 (CN)
(72) Inventor: XU, Yishan, Shenzhen, Guangdong 518129 (CN); ZHOU, Runze, Shenzhen, Guangdong 518129 (CN); HAN, Zhilin, Shenzhen, Guangdong 518129 (CN)
(74) Representative: Goddar, Heinz J.
(86) International application number: PCT/CN2024/103710
(87) International publication number: WO 2025/025975

(57) **Abstract**

Embodiments of this application provide a location management method and an apparatus. A first core network device obtains a terminal identifier of a first terminal device, and determines, based on the terminal identifier, to perform location management on the first terminal device; determines an area identity set for performing the location management; and sends the area identity set to the first terminal device. In this solution, after obtaining the terminal identifier of the first terminal device, the first core network device sends, to the first terminal device only when determining to perform the location management on the first terminal device, the area identity set for performing the location management. In this way, a core network can perform the location management on a terminal device based on a requirement instead of blindly performing the location management on all terminals, so that network overheads can be reduced, and location management efficiency can be improved.

## Description

### CROSS-REFERENCE TO RELATED APPLICATIONS

This application claims priority to Chinese Patent Application No. 202310952525.4, filed with the China National Intellectual Property Administration on July 31, 2023 and entitled "LOCATION MANAGEMENT METHOD AND APPARATUS", which is incorporated herein by reference in its entirety.

### TECHNICAL FIELD

This application relates to the field of communication technologies, and in particular, to a location management method and an apparatus.

### BACKGROUND

Currently, a mobile network may use a tracking area (tracking area, TA) to perform location management on a terminal device: The mobile network is divided into a plurality of TAs, a plurality of geographically close cells may be assigned to a same TA, and different TAs are distinguished by using different tracking area identities (tracking area identities, TAIs). After the terminal device is registered with the network, a network device responsible for mobility management determines a registration area (registration area, RA) for the terminal device based on radio access network device connected to the network device, TAs included in a management range of the network device, and the like. The RA may include one or more TAs, and the RA may be a TAI list in a representation form. The TAI list is delivered to the terminal device, and the terminal device stores the TAI list. When a TAI detected by the terminal device in a cell broadcast message is included in the TAI list, it indicates that the terminal device moves in the registration area, and the terminal device may not update the network on a location of the terminal device. When a TAI detected by the terminal device in a cell broadcast message is not included in the TAI list, it indicates that the terminal device moves out of the registration area, and the terminal device may initiate a tracking area update procedure or a mobility registration update procedure, to notify the network device responsible for the mobility management that the terminal device has left the registration area, so that the network device responsible for the mobility management configures a new registration area for the terminal device.

In an internet of things technology, for example, a passive internet of things (passive IoT, P-IoT) or ambient power-enabled internet of things (ambient IoT, A-IoT) technology, the terminal device may be active (active), passive (passive), or semi-passive (semi-passive). A passive or semi-passive terminal device does not have a capability of active communication, and can perform communication only under network excitation. Therefore, in an internet of things, not all terminals necessarily support the foregoing location management manner.

How to perform the location management on the terminal device in the internet of things is an urgent problem to be resolved.

### SUMMARY

Embodiments of this application provide a location management method and an apparatus, to perform location management on a terminal device in an internet of things, so that network overheads can be reduced, and location management efficiency can be improved.

According to a first aspect, a location management method is provided. The method may be applied to a first core network device or a chip in the first core network device. For example, the method is applied to the first core network device. The method includes: The first core network device obtains a terminal identifier of a first terminal device, and determines, based on the terminal identifier, to perform location management on the first terminal device; determines an area identity set for performing the location management; and sends the area identity set to the first terminal device.

In the foregoing solution, after receiving the terminal identifier of the first terminal device, the first core network device needs to determine whether to perform the location management on the first terminal device, and sends, to the first terminal device only when determining to perform the location management on the first terminal device, information (for example, the area identity set) for performing the location management. In this way, a core network can perform the location management on a terminal device based on a requirement instead of blindly performing the location management on all terminals, so that network overheads (for example, context maintenance costs) can be reduced, and location management efficiency can be improved.

In a possible design, the first core network device may obtain subscription data of the first terminal device from a second core network device based on the terminal identifier, where the subscription data includes at least one of first information, second information, or capability information of the terminal device, the first information indicates that the location management needs to be performed on the first terminal device, the second information indicates that a first service requester needs the location management, the first service requester is a service requester that manages the first terminal device, and the capability information of the first terminal device indicates that the first terminal device supports the location management; and determine, based on the subscription data, to perform the location management on the first terminal device.

In this way, the first core network device may determine, based on the subscription data, to perform the location management on the first terminal device.

In a possible design, the first core network device may receive a first message, where the first message includes the terminal identifier of the first terminal device and capability information of the first terminal device, and the capability information of the first terminal device indicates that the first terminal device supports the location management. Accordingly, the first core network device may obtain subscription data of the first terminal device from a second core network device based on the terminal identifier, where the subscription data includes first information and/or second information, the first information indicates that the location management needs to be performed on the first terminal device, the second information indicates that a first service requester needs the location management, and the first service requester is a service requester that manages the first terminal device; and determine, based on the subscription data and the capability information of the first terminal device, to perform the location management on the first terminal device.

In this way, the first core network device may determine, based on the subscription data and the capability information reported by the first terminal device, to perform the location management on the first terminal device.

In a possible design, the first core network device may receive a first message, where the first message includes the terminal identifier of the first terminal device and capability information of the first terminal device, and the capability information of the first terminal device indicates that the first terminal device supports the location management; and determine, based on the terminal identifier and the capability information of the first terminal device, to perform the location management on the first terminal device.

In this way, the first core network device may determine, based on subscription data and the capability information reported by the first terminal device, to perform the location management on the first terminal device.

In a possible design, the first message may be a first registration request message; and the first core network device may send a first registration accept message to the first terminal device, where the first registration accept message indicates that the first terminal device is successfully registered, the first registration accept message includes the area identity set, and an area indicated by the area identity set is a registration area allocated by the first core network device to the first terminal device.

In this way, whether to perform the location management on the first terminal device may be determined in a registration procedure of the first terminal device, and the area identity set for the location management may be delivered to the first terminal device, without a need to separately send an additional message, so that a system resource can be saved.

In a possible design, before determining, based on the terminal identifier, to perform the location management on the first terminal device, the first core network device may further obtain information locally configured in the first core network device, where the information configured locally in the first core network device includes at least one of a terminal device list, a service requester list, and capability information of the first terminal device, the terminal device list indicates a terminal device on which the location management needs to be performed, the terminal device list includes the terminal identifier of the first terminal device, the service requester list indicates a service requester that needs the location management, the service requester list includes an identifier of a first service requester, the first service requester is a service requester that manages the first terminal device, and the capability information of the first terminal device indicates that the first terminal device supports the location management. Accordingly, the first core network device may determine, based on the terminal identifier and the information locally configured in the first core network device, to perform the location management on the first terminal device.

In this way, the first core network device may determine, based on a local configuration, to perform the location management on the first terminal device.

In a possible design, before determining, based on the terminal identifier, to perform the location management on the first terminal device, the first core network device may further receive a second message from a first service requester, where the second message includes first information and/or second information, the first information indicates that the location management needs to be performed on the first terminal device, the second information indicates that the first service requester requests the location management, and the first service requester is a service requester that manages the first terminal device. Accordingly, the first core network device may determine, based on the terminal identifier, and the first information and/or the second information, to perform the location management on the first terminal device.

In this way, the first core network device may perform the location management on the first terminal device based on an indication of the first service requester.

In a possible design, second location information may further be obtained, where the second location information indicates an area for performing the location management. The first core network device may receive the terminal identifier of the first terminal device from a first access network device. The first core network device may further determine first location information based on location information of the first access network device, where the first location information indicates an area in which the first terminal device is located; and determine, based on the first location information and the second location information, that the first terminal device is located in the area for performing the location management.

It may be understood that the second location information may be sent by the first service requester, may be sent by another core network device (for example, the second core network device), or may be pre-configured in the first core network device. A source of the second location information is not limited in this embodiment of this application. It may be understood that, when the first service requester sends the second location information to the first core network device, the second location information may be carried in the second message, or may be carried in another message. This is not limited in this embodiment of this application.

In this way, the first core network device may perform the location management on the first terminal device only when the first terminal device is located in the area for performing the location management.

In a possible design, the first core network device may further obtain a preset route of the first terminal device. Accordingly, the first core network device may determine, based on an area that covers a part or all of the preset route, the area identity set for performing the location management, where the area identity set includes an area identity of the area that covers the part or all of the preset route.

It may be understood that the preset line may be sent by the first service requester, may be sent by the another core network device (for example, the second core network device), or may be pre-configured in the first core network device. A source of the preset line is not limited in this embodiment of this application. It may be understood that, when the first service requester sends the preset line to the first core network device, the preset line may be carried in the second message, or may be carried in the another message. This is not limited in this embodiment of this application. In a specific example, the second location information includes the preset line, or the second location information is the preset line.

In an internet of things scenario, a service requester usually requires the terminal device to move based on the preset route. Therefore, the first core network device determines, based on the preset route (in other words, an area corresponding to the preset route), the area identity set for performing the location management. In this way, the location management may be performed on the terminal device on the preset route (in other words, in the area corresponding to the preset route), so that the location management efficiency can be improved, and power consumption can further be reduced.

In a possible design, the first core network device may further receive the terminal identifier of the first terminal device from a second access network device; determine, based on location information of the second access network device, the area in which the first terminal device is located; if the area in which the first terminal device is located does not belong to an area on the preset route, determine that the first terminal device deviates from the preset route; and send third information to the first service requester, where the third information indicates that a location of the first terminal device is abnormal, and the first service requester is the service requester that manages the first terminal device.

In this way, when the first terminal device deviates from the preset route, the first core network device can notify the first service requester, so that the first service requester can discover a route error of the first terminal device in time, to reduce transportation costs caused by the route error.

In a possible design, first time information may further be obtained, where the first time information indicates a time period for performing the location management; and the first core network device may determine, based on the terminal identifier when a current time point is within the time period indicated by the first time information, to perform the location management on the first terminal device.

It may be understood that the first time information may be sent by the first service requester, may be sent by the another core network device (for example, the second core network device), or may be pre-configured in the first core network device. A source of the first time information is not limited in this embodiment of this application. It may be understood that, when the first service requester sends the first time information to the first core network device, the first time information may be carried in the second message, or may be carried in the another message. This is not limited in this embodiment of this application.

In this way, the location management may be performed on the first terminal device only in the time period in which the location management needs to be performed, so that location management effectiveness can be improved, and the power consumption can further be reduced.

In a possible design, the first core network device may further obtain location information of a target location and second time information, where the second time information indicates a time point at which the first terminal device arrives at the target location; determine whether the first terminal device arrives at the target location by the time point indicated by the second time information; and if the first terminal device does not arrive at the target location by the time point indicated by the second time information, send fourth information to the first service requester, where the fourth information indicates that the location of the first terminal device is abnormal, and the first service requester is the service requester that manages the first terminal device.

It may be understood that the location information of the target location and the second time information may be sent by the first service requester, may be sent by the another core network device (for example, the second core network device), or may be pre-configured in the first core network device. A source of the location information of the target location and the second time information is not limited in this embodiment of this application. It may be understood that, when the first service requester sends the location information of the target location and the second time information to the first core network device, the location information of the target location and the second time information may be carried in the second message, or may be carried in the another message. This is not limited in this embodiment of this application.

The following uses several implementations of determining whether the first terminal device arrives at the target location by the time point indicated by the second time information as examples.

Manner 1: Paging information is sent to one or more access network devices by the time point indicated by the second time information, where the paging information indicates to page the first terminal device, and the paging information includes the terminal identifier of the first terminal device; the terminal identifier of the first terminal device is received from a third access network device, and that the first terminal device is located in an area corresponding to location information of the third access network device is determined; and whether the first terminal device arrives at the target location by the time point indicated by the second time information is determined based on the location information of the third access network device and the location information of the target location.

Manner 2: Paging information is sent, by the time point indicated by the second time information, to one or more access network devices corresponding to the target location, where the paging information indicates to page the first terminal device, and the paging information includes the terminal identifier of the first terminal device; and whether the first terminal device arrives at the target location by the time point indicated by the second time information is determined depending on whether the terminal identifier of the first terminal device is received from any one of the one or more access network devices corresponding to the target location.

Manner 3: The area identity set does not include an area identity of an area that covers the target location. The terminal identifier of the first terminal device is received from a third access network device; that the area in which the first terminal device is located is the area that covers the target location is determined based on location information of the third access network device; and whether the first terminal device arrives at the target location by the time point indicated by the second time information is determined based on the current time point and the second time information.

It may be understood that the foregoing several manners are merely examples. This is actually not limited thereto.

In this way, the first service requester may learn in time that the first terminal device does not arrive at a specified location by a specified time point and/or discover the route error of the first terminal device in time, to reduce the transportation costs caused by the error.

In a possible design, the first core network device may further obtain third time information, where the third time information indicates preset duration; determine that the first terminal device is located at a same location for more than the preset duration; and send fifth information to the first service requester, where the fifth information indicates that the location of the first terminal device is abnormal, and the first service requester is the service requester that manages the first terminal device.

It may be understood that the third time information may be sent by the first service requester, may be sent by the another core network device (for example, the second core network device), or may be pre-configured in the first core network device. A source of the third time information is not limited in this embodiment of this application. It may be understood that, when the first service requester sends the third time information to the first core network device, the third time information may be carried in the second message, or may be carried in the another message. This is not limited in this embodiment of this application.

The following uses several implementations of determining that the first terminal device is located at the same location for more than the preset duration as examples.

Manner 1: The paging information is sent to the one or more access network devices, where the paging information is for paging the first terminal device, and the paging information includes the terminal identifier of the first terminal device; and if duration of receiving the terminal identifier of the first terminal device from a same access network device a plurality of consecutive times exceeds the preset duration, the first core network device determines that the first terminal device is located at the same location for more than the preset duration.

Manner 2: The paging information is periodically sent to the one or more access network devices based on the preset duration, where the paging information is for paging the first terminal device, and the paging information includes the terminal identifier of the first terminal device; and if the terminal identifier of the first terminal device is received from a same access network device a plurality of times, the first core network device determines that the first terminal device is located at the same location for more than the preset duration.

Manner 3: The area identity set includes an area identity of an area that covers the part of the preset route. If for more than the preset duration, the terminal identifier of the first terminal device is not received from any access network device outside the area represented by the area identity set, the first core network device determines that the first terminal device is located at the same location for more than the preset duration.

It may be understood that the foregoing several manners are merely examples. This is actually not limited thereto.

In this way, the first service requester may discover in time that the first terminal device is located at the same location for more than the preset duration, so that the first service requester checks in time whether the first terminal device is dropped during movement or whether a transport tool for transporting the first terminal device is faulty.

In a possible design, the second message is a service subscription request message, and the service subscription request message indicates the first core network device to provide a location management service for the first terminal device or a terminal device managed by the first service requester.

In this way, the location management may be used as a service, and the location management service is subscribed to, on demand, for the first terminal device or the terminal device managed by the first service requester, so that location management effectiveness can be improved.

In a possible design, the first core network device may further send, to a third core network device, charging information corresponding to the location management, where
the charging information includes at least one of the following:
event type information, indicating an event corresponding to the location management;
a quantity of area identities for performing the location management;
duration of performing the location management;
a quantity of times the location management is performed; and
a quantity of terminal devices on which the location management is performed.

In this way, when the location management is used as a service, the first core network device may send, to the third core network device, the charging information corresponding to the location management, so that the third core network device collects statistics on a fee, to implement paid use of the location management.

In a possible design, the first core network device may further receive a third message from the first service requester, where the third message indicates to stop performing the location management on the first terminal device; and send sixth information and/or seventh information to the first terminal device based on the third message, where the sixth information indicates the first terminal device to remove the area identity set, and the seventh information indicates that the first terminal device does not need to update a network on the location of the first terminal device.

In this way, the first core network device may stop, in time based on a requirement of the service requester, performing the location management on the first terminal device, so that the system resource can be saved.

In a possible design, the first core network device may further receive a second registration request message from a second terminal device, where the second registration request message includes a terminal identifier of the second terminal device; determine, based on the terminal identifier of the second terminal device, not to perform the location management on the second terminal device; and send a second registration accept message to the second terminal device, where the second registration accept message indicates that the second terminal device is successfully registered, and an area identity in the second registration accept message is null or a default area identity.

In this way, the location management may not be performed on the second terminal device by configuring no area identity for the second terminal device or by configuring the default area identity for the second terminal device. This can further reduce the network overheads (for example, the context maintenance costs), and improve the location management efficiency.

According to a second aspect, a location management method is provided. The method may be applied to a first core network device or a chip in the first core network device. For example, the method is applied to the first core network device. The method includes: The first core network device receives a second registration request message from a second terminal device, where the second registration request message includes a terminal identifier of the second terminal device; determines, based on the terminal identifier of the second terminal device, not to perform location management on the second terminal device; and sends a second registration accept message to the second terminal device, where the second registration accept message indicates that the second terminal device is successfully registered, and an area identity in the second registration accept message is null or a default area identity.

In this way, the location management may not be performed on the second terminal device by configuring no area identity for the second terminal device or by configuring the default area identity for the second terminal device. In this way, a core network can perform the location management on a terminal device based on a requirement instead of blindly performing the location management on all terminals, so that network overheads (for example, context maintenance costs) can be reduced, and location management efficiency can be improved.

According to a third aspect, a location management method is provided. The method may be applied to a first service requester or a chip in the first service requester. For example, the method is applied to a first core network device. The method includes: determining a second message, where the second message includes first information and/or second information, the first information indicates that location management needs to be performed on a first terminal device, the second information indicates that the first service requester requests the location management, and the first service requester is a service requester that manages the first terminal device; and sending the second message to a first core network device.

In a possible design, the second message further includes one or more of the following:
second location information, where the second location information indicates an area for performing the location management;
a preset route of the first terminal device;
first time information, where the first time information indicates a time period for performing the location management;
location information of a target location and second time information, where the second time information indicates a time point at which the first terminal device arrives at the target location; and
third time information, where the third time information indicates preset duration.

In a possible design, the first service requester may further receive third information, fourth information, or fifth information from the first core network device, where the third information, the fourth information, or the fifth information indicates that a location of the first terminal device is abnormal.

In a possible design, the second message is a service subscription request message, and the service subscription request message indicates the first core network device to provide a location management service for the first terminal device or a terminal device managed by the first service requester.

In a possible design, the first service requester sends a third message to the first core network device, where the third message indicates to stop performing the location management on the first terminal device.

According to a fourth aspect, a location management method is provided. The method may be applied to a second terminal device or a chip in the second terminal device. For example, the method is applied to the second terminal device. The method includes: sending a second registration request message to a first core network device, where the second registration request message includes a terminal identifier of the second terminal device; receiving a second registration accept message from the first core network device, where the second registration accept message indicates that the second terminal device is successfully registered, and an area identity in the second registration accept message is null or a default area identity; and determining, based on a locally stored area identity being null or the default area identity, that an area identity in a cell broadcast message does not need to be monitored or a mobility registration update procedure does not need to be performed.

According to a fifth aspect, a communication apparatus is provided. The apparatus includes a module, a unit, or a technical means for performing the method according to any one of the first aspect or the possible design manners of the first aspect.

For example, the apparatus may include:
a transceiver module, configured to obtain a terminal identifier of a first terminal device; and
a processing module, configured to: determine, based on the terminal identifier, to perform location management on the first terminal device; and determine an area identity set for performing the location management, where
the transceiver module is further configured to send the area identity set to the first terminal device.

According to a sixth aspect, a communication apparatus is provided. The apparatus includes a module, a unit, or a technical means for performing the method according to any one of the second aspect or the possible design manners of the second aspect.

For example, the apparatus may include:
a transceiver module, configured to receive a second registration request message from a second terminal device, where the second registration request message includes a terminal identifier of a second terminal device; and
a processing module, configured to determine, based on the terminal identifier of the second terminal device, not to perform location management on the second terminal device, where
the transceiver module is further configured to send a second registration accept message to the second terminal device, where the second registration accept message indicates that the second terminal device is successfully registered, and an area identity in the second registration accept message is null or a default area identity.

According to a seventh aspect, a communication apparatus is provided. The apparatus includes a module, a unit, or a technical means for performing the method according to any one of the third aspect or the possible design manners of the third aspect.

For example, the apparatus may include:
a processing module, configured to determine a second message, where the second message includes first information and/or second information, the first information indicates that location management needs to be performed on a first terminal device, the second information indicates that a first service requester requests the location management, and the first service requester is a service requester that manages the first terminal device; and
a transceiver module, configured to send the second message to a first core network device.

According to an eighth aspect, a communication apparatus is provided. The apparatus includes a module, a unit, or a technical means for performing the method according to any one of the fourth aspect or the possible design manners of the fourth aspect.

For example, the apparatus may include:
a transceiver module, configured to: send a second registration request message to a first core network device, where the second registration request message includes a terminal identifier of a second terminal device; and receive a second registration accept message from the first core network device, where the second registration accept message indicates that the second terminal device is successfully registered, and an area identity in the second registration accept message is null or a default area identity; and
a processing module, configured to determine, based on a locally stored area identity being null or the default area identity, that an area identity in a cell broadcast message does not need to be monitored or a mobility registration update procedure does not need to be performed.

According to a ninth aspect, a communication apparatus is provided. The communication apparatus includes a processor. The processor is configured to perform the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to a tenth aspect, a computer-readable storage medium is provided. The computer-readable storage medium includes instructions. When the instructions are run by a processor, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is enabled to be implemented.

According to an eleventh aspect, a computer program product is provided. The computer program product includes instructions. When the instructions are run by a processor, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is enabled to be implemented.

According to a twelfth aspect, an embodiment of this application provides a communication system. The communication system includes a first core network device configured to implement the function in the first aspect and a first service requester configured to implement the function in the third aspect; or the communication system includes a first core network device configured to implement the function in the second aspect and a second terminal device configured to implement the function in the fourth aspect.

For beneficial effects of the designs of the second aspect to the twelfth aspect, refer to the descriptions of the beneficial effects of the corresponding designs of the first aspect and the second aspect.

### BRIEF DESCRIPTION OF DRAWINGS

FIG. 1 is a diagram of an architecture of a communication system according to an embodiment of this application;
FIG. 2 is a diagram of a registration procedure of a terminal device;
FIG. 3A and FIG. 3B are diagrams of service architectures of a passive internet of things;
FIG. 4 is a flowchart of a location management method according to an embodiment of this application;
FIG. 5A is a diagram of coverage of a first access network device;
FIG. 5B is a diagram of a preset route;
FIG. 5C is a diagram of an actual movement trajectory of a first terminal device;
FIG. 6 is a flowchart of a location management method according to an embodiment of this application;
FIG. 7 is a flowchart of another location management method according to an embodiment of this application;
FIG. 8 is a flowchart of another location management method according to an embodiment of this application;
FIG. 9A and FIG. 9B are a flowchart of another location management method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. "And/or" describes an association relationship between associated objects and three relationships may specifically exist. For example, A and/or B may represent the following three cases: Only A exists, both A and B exist, and only B exists. In addition, unless otherwise specified, the character "/" generally indicates an "or" relationship between the associated objects.

In addition, the terms "system" and "network" in embodiments of this application may be used interchangeably, and "according to" and "based on" may be used interchangeably.

Ordinal numerals such as "first", "second", and "third" in embodiments of this application are usually for distinguishing between different objects, and are not for limiting a sequence, a time sequence, priorities, importance degrees, or the like of the plurality of objects. For example, first information and second information in embodiments of this application are for distinguishing between two pieces of information, and do not limit priorities, importance degrees, or the like of the two pieces of information.

Embodiments of this application are presented around a system including a plurality of devices, components, modules, and the like. It should be understood that the system may include other devices, components, modules, and the like that are not mentioned, or may include only some devices, components, modules, and the like that are mentioned in embodiments.

Communication systems to which embodiments of this application are applicable are first described below.

Embodiments of this application are applicable to communication systems of various standards, for example, a long term evolution (long term evolution, LTE) communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), an internet of vehicles, machine type communication (machine type communication, MTC), an IoT, long term evolution-machine to machine (LTE-machine to machine, LTE-M), machine to machine (machine to machine, M2M), and the internet of things.

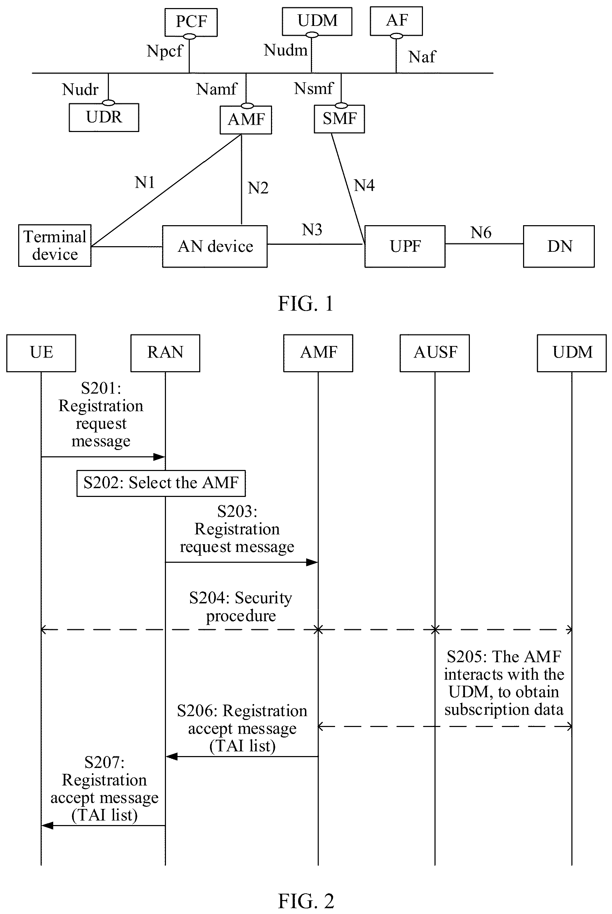

FIG. 1 is a diagram of an architecture of a communication system according to an embodiment of this application, and shows a 5th generation (5th generation, 5G) network architecture that is based on a service-based architecture. The 5G network architecture shown in FIG. 1 may include a terminal device, an access network (access network, AN) device, and a core network (core network, CN) device. The terminal device accesses a data network (data network, DN) via the access network device and the core network device. The following describes components of the communication system.

The terminal device includes a device that provides voice and/or data connectivity for a user. For example, the terminal device is a device that has a wireless transceiver function, and may be deployed on land, where the deployment includes indoor, outdoor, handheld, wearable, or vehicle-mounted deployment; may be deployed on water (for example, on a ship); or may be deployed in the air (for example, on an airplane, a balloon, or a satellite). The terminal device may be a tag (Tag), a mobile phone (mobile phone), a tablet computer (Pad), a computer that has the wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application.

The terminal device may also be sometimes referred to as a terminal, a user equipment (user equipment, UE), an access terminal, a vehicle-mounted terminal, a terminal in the industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

In a passive internet of things scenario, the terminal device may alternatively be used as a tag, and the terminal device may also be sometimes referred to as the tag.

The access network device is a device that provides a wireless communication function for the terminal device. For example, the access network device includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmission point (transmitting point, TP), and a mobile switching center.

In some deployment, the gNB may include a central unit (central unit, CU) and a distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may alternatively be considered as being sent by the DU or sent by the DU and the AAU. It may be understood that the access network device may include one or more of a CU node, a DU node, and an AAU node. In addition, the CU may be classified as an access network device in an access network, or the CU may be classified as an access network device in a CN. The access network device may be a radio access network (radio access network, RAN) device or a wireline access network (wireline access network, FAN) device. The RAN device may be a 5G RAN device, may be a 6G RAN device, or may have another name. This is not limited in this application.

The access network device and the terminal device may be at fixed locations, or may be movable. The access network device and the terminal device may be deployed on land, where the deployment includes indoor, outdoor, handheld, or vehicle-mounted deployment; may be deployed on water; or may be deployed on a plane, a balloon, and a satellite in the air. Application scenarios of the access network device and the terminal device are not limited in embodiments of this application.

The core network device includes some or all of the following network elements: a unified data management (unified data management, UDM) network element, a unified data repository (unified data repository, UDR) network element, a network exposure function (network exposure function, NEF) network element (not shown in the figure), a policy control function (policy control function, PCF) network element, an access and mobility management function (access and mobility management function, AMF) network element, a session management function (session management function, SMF) network element, a user plane function (user plane function, UPF) network element, an internet of things function (Internet of Thing management function, IoTMF) network element, and the like.

A mobility management network element is a control plane network element provided by an operator network, and is responsible for access control and mobility management for accessing the operator network by the terminal device, for example, including functions such as mobility state management, allocation of a temporary user identity, and user authentication and authorization. In 5G, the mobility management network element may be the AMF network element. In future communication such as 6th generation (6th generation, 6G), the mobility management network element may still be the AMF network element, or may have another name. This is not limited in this application.

A data management network element is a control plane network element provided by an operator, and is responsible for storing a subscriber permanent identifier (subscriber permanent identifier, SUPI), a credential (credential), a security context (security context), subscription data, a service profile, and the like of a subscriber in the operator network. The subscription data may include subscription data of the terminal device (in other words, the user), and may further include subscription data of a service requester (for example, a service requester that manages the terminal device, specifically, for example, a server, an application function, a third party, an enterprise, or the user). In 5G, the data management network element may be the UDM network element. In the future communication such as 6G, the data management network element may still be the UDM network element, or may have another name. This is not limited in this application.

A session management network element is a control plane network element provided by the operator network, and is responsible for managing a protocol data unit (protocol data unit, PDU) session of the terminal device. In 5G, the session management network element may be the SMF network element. In the future communication such as 6G, the session management network element may still be the SMF network element, or may have another name. This is not limited in this application.

A user plane network element is a gateway provided by the operator, and is a gateway for communication between the operator network and the DN. In 5G, the user plane network element may be the UPF network element. In the future communication such as 6G, the user plane network element may still be the UPF network element, or may have another name. This is not limited in this application.

The unified data repository network element is a control plane network element provided by the operator, and includes a function of accessing data of types such as subscription data, policy data, and application data. In 5G, the unified data repository network element may be the UDR network element. In the future communication such as 6G, the unified data repository network element may still be the UDR network element, or may have another name. This is not limited in this application.

A network exposure network element is a control plane network element provided by the operator. The network exposure network element securely exposes an external interface of the operator network to the third party. In 5G, the network exposure network element may be the NEF network element. In the future communication such as 6G, the network exposure network element may still be the NEF network element, or may have another name. This is not limited in this application.

A policy control network element is a control plane function provided by the operator, and is configured to provide a policy of the PDU session for the session management network element. The policy may include a charging-related policy, a QoS-related policy, an authorization-related policy, and the like. In 5G, the policy control network element may be the PCF network element. In the future communication such as 6G, the policy control network element may still be the PCF network element, or may have another name. This is not limited in this application.

A location management function (location management function, LMF) network element may be configured to: determine a location of the UE, obtain downlink location measurement or location estimation from the UE, and so on. For example, in 5G, the location management function network element may be the LMF network element. In a future communication system such as 6G, the location management function network element may still be the LMF network element, or may have another name. This is not limited in this application.

The internet of things function network element is a control plane network element or a network element having a user plane data transmission function. The function may be interconnected with the access network device. This is equivalent to that there is an interface between the access network device and the function. Alternatively, the function may communicate with the access network device via a mobility management device (for example, an AMF). The function may be for performing functions such as internet of things terminal (also referred to as ambient power-enabled internet of things ambient IoT terminal) management, internet of things terminal data processing, and internet of things terminal data routing. The function may parse a message or instructions from the service requester (or the application function), determine, based on the message or the instructions, a reader (for example, the access network device or a terminal device having a reader function) that executes the instructions or performs an operation, and indicate the reader to perform an operation of an internet of things terminal or indicate the reader to perform a random access procedure of the internet of things terminal; receive data from the internet of things terminal via the reader; and optionally, perform the internet of things terminal data processing, and send the data of the internet of things terminal to the service requester. It may be understood that, during specific implementation, the function may alternatively have another name. This is not limited in this application. The function may be an independent network element, or may be integrated with another network element in the core network.

The 5G network architecture shown in FIG. 1 further includes an application function (application function, AF) network element. The AF network element may be configured to transfer a requirement of an application side on a network side, for example, a QoS requirement or user status event subscription. The application function network element may be a third-party functional entity, or may be an application server deployed by the operator. In 5G, the application function network element may be the AF network element. In the future communication such as 6G, the application function network element may still be the AF network element, or may have another name. This is not limited in this application.

In some embodiments, the 5G network architecture shown in FIG. 1 may include the service requester (also referred to as an operation requester or the third party), and a specific implementation form may be the server, the application function (for example, an AF), or the like. In embodiments of this application, the service requester may be understood as the operation requester. The service requester or the operation requester may be understood as a device that sends an operation instruction. For example, the service requester or the operation requester may be the server (server), an A-IoT server, the AF network element, or another device that sends the operation instruction. The operation requester may correspond to a specific type of user. The specific type of user may include the enterprise, a tenant, the third party, or a company. This is not limited. That the service requester corresponds to the specific type of user may be understood as that the service requester belongs to the specific type of user and is managed by the specific type of user.

The data network is a network located outside the operator network. The operator network may access a plurality of DNs, a plurality of services may be deployed in the DN, the DN may provide the terminal device with a service like data and/or voice.

In FIG. 1, Npcf, Nudr, Nudm, Naf, Namf, and Nsmf are respectively service-oriented interfaces provided by the PCF, the UDR, the UDM, the AF, the AMF, and the SMF, and are configured to invoke corresponding service-oriented operations. An N1 interface is an interface between the AMF and the terminal device, and may be configured to transfer non-access stratum (non-access stratum, NAS) signaling (for example, including a QoS rule from the AMF) and the like to the terminal device. An N2 interface is an interface between the AMF and the RAN, and may be configured to transfer radio bearer control information and the like from a core network side to the RAN. An N3 interface is an interface between the RAN and the UPF, and is mainly configured to transfer uplink/downlink user plane data between the RAN and the UPF. An N4 interface is an interface between the SMF and the UPF, and may be configured to transfer information between a control plane and a user plane, including delivery of a forwarding rule, a QoS control rule, a traffic statistics rule, and the like from the control plane to the user plane, and reporting of user plane information. An N6 interface is an interface between the UPF and DN, and is configured to transfer an uplink/downlink user data flow between the UPF and the DN.

To enable the core network to efficiently page a specific terminal within a small range, the AMF may send a registration area (Registration Area, RA) to the UE in a registration accept (Registration Accept) message in a UE registration procedure. The registration area may be a tracking area identity (Tracking Area Identity, TAI) list (list). When the UE moves in the registration area, the UE does not need to update the network on a location of the UE. When the UE moves from the registration area to a location outside the registration area (for example, when the UE learns, through monitoring, that a TAI broadcast by a base station does not belong to any TAI in the TAI list), the UE needs to initiate a mobility registration update procedure. That is, the UE sends a registration request message, where a registration type (Registration type) included in the registration request message is mobility registration update. The AMF sends a new registration area (namely, a new TAI list) to the UE based on some configurations or policies. Based on the procedure, even if the terminal is in an idle state (to be specific, there is no connection between the terminal and the core network), the terminal can notify the core network when moving out of the registration area, so that the core network can perform mobility management on the terminal. An advantage thereof is that the core network can always manage mobility of the terminal at a registration area granularity. When downlink data needs to be sent to the terminal, the core network may preferentially page the UE from a current registration area, to improve efficiency.

FIG. 2 shows an example of a registration procedure of a terminal device. Specific steps are as follows:

S201: The UE sends a registration request message to a RAN, where the registration request message carries a registration type and identification information of the UE.

S202: The RAN selects an appropriate AMF.

S203: The RAN sends the registration request message to the AMF.

Optionally, S204: The AMF selects an appropriate network device (authentication server function, AUSF) responsible for mobility management, to perform a security procedure like authentication; and the UE, the AMF, the AUSF, and a UDM interact with each other to complete the security procedure like the authentication.

Optionally, S205: After mutual authentication between the UE and a network side succeeds, the AMF interacts with the UDM, to obtain subscription data of the UE.

S206: The AMF sends an N2 message to the RAN, where the N2 message includes a non-access stratum (non-access stratum, NAS) message that needs to be forwarded by the RAN to the UE, the NAS message includes a registration accept message sent by the AMF to the UE, and the registration accept message includes a registration area (registration area, RA), for example, a TAI list.

S207: The RAN forwards, to the UE, the NAS message sent by the AMF (the NAS message includes the registration accept message).

In a registration procedure of each terminal device, a registration accept message sent by the AMF to the RAN for the terminal device carries a TAI list. In other words, TAI lists are configured for all terminal devices that are successfully registered. That is, location management is performed on all the terminal devices.

In a passive internet of things (passive IoT, P-IoT) or ambient power-enabled internet of things (Ambient IoT, A-IoT) technology, the internet of things terminal, for example, an active terminal device, a passive terminal device, a semi-passive terminal device, or a semi-active terminal device, is included. The internet of things terminal may be in a tag form, a sensor form, or the like. A form of the terminal device is not limited in this application. The access network device (for example, the base station) may be used as a reader (also referred to as a reader/writer), the application function network element may be used as a server, and the core network device may perform a procedure related to an internet of things service (for example, the internet of things terminal management), for example, functions such as access management, security authentication, instruction transmission, and service data transmission.

It may be understood that a device form or a name of the internet of things terminal is not limited in embodiments of this application. For ease of description, an example in which the internet of things terminal is in the tag form is used for description in embodiments of this application. In embodiments of this application, unless otherwise specified, a passive internet of things may be replaced with an ambient power-enabled internet of things, the ambient power-enabled internet of things, an internet of things, and the like.

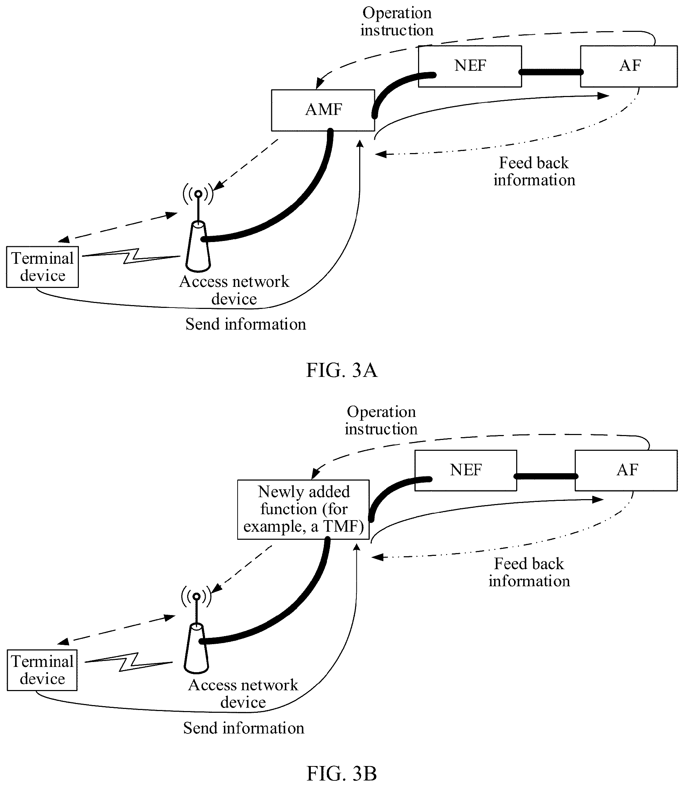

FIG. 3A and FIG. 3B are diagrams of service architectures of a passive internet of things. In FIG. 3A, an enhanced access management device (for example, an AMF network element) performs a procedure related to an internet of things service.

In FIG. 3B, a newly added function, for example, a tag management function (tag management function, TMF), an internet of things management function (IoT management function, IMF), an internet of things terminal management function, an ambient power-enabled internet of things terminal management function (ambient iot management function, AITMF), an ambient power-enabled internet of things function (ambient IoT function, AIoTF), an ambient power-enabled internet of things terminal management function, the ambient power-enabled internet of things management function, or another network element, performs a procedure related to an internet of things service. The function may be interconnected with an access network device. This is equivalent to that there is an interface between the access network device and the function. Alternatively, the function may communicate with an access network device via a mobility management device (for example, an AMF). The function may be for performing functions such as internet of things terminal (also referred to as ambient power-enabled internet of things ambient IoT terminal) management, internet of things terminal data processing, and internet of things terminal data routing. The function may parse a message or instructions from a service requester (or an application function), determine, based on the message or the instructions, a reader (for example, the access network device or a terminal device having a reader function) that executes the instructions or performs an operation, and indicate the reader to perform an operation of an internet of things terminal or indicate the reader to perform a random access procedure of the internet of things terminal; receive data from the internet of things terminal via the reader; and optionally, perform the internet of things terminal data processing, and send the data of the internet of things terminal to the service requester. It may be understood that, during specific implementation, the function may alternatively have another name. This is not limited in this application. The function may be an independent network element, or may be integrated with another network element in a core network. For example, the TMF network element may be integrated with the AMF network element. In a possible implementation, when the function is integrated with the another network element in the core network, interaction between the function and the another network element is an internal operation of the network element, or may be omitted.

When performing an operation on the tag, the server may send an operation instruction to the core network, where the operation instruction may include but is not limited to obtaining tag information, performing a stocktaking operation (also referred to as an inventory operation), performing a read operation, performing a write operation, performing a disable operation, or performing an operation of exchanging information with the tag. The instruction may include area location information, identification information of the tag, and the like. The base station sends an access instruction to the tag. After random access of the tag succeeds, the base station may send an instruction to the tag (the base station may forward, to the tag, an instruction sent by the core network). The tag obtains or sends corresponding information based on the instruction. For example, when the instruction is a stocktaking instruction or performing the stocktaking operation, the tag sends the identification information of the tag. When the instruction is a read instruction or performing the read operation, the tag sends data information stored in a storage area of the tag. When the instruction is a write instruction or performing the write operation, the tag may store, in a storage area of the tag, data information that is to be written to the tag and that is included in the instruction. The base station sends (or forwards), to the core network, the information sent by the tag. The core network sends the information to the server.

However, a terminal device in the passive internet of things (referred to as the internet of things terminal for short) is usually a low-power and low-complexity terminal device. The passive or semi-passive terminal can initiate communication only under network excitation, and cannot actively initiate the communication. In addition, for pure passive terminals, after power failures, the terminals cannot record status information (for example, information such as registration statuses or registration areas), and the terminals are not in a connected state. Therefore, a mobility management mechanism shown in FIG. 2 is not applicable to the internet of things terminal.

In view of this, in the passive internet of things scenario (or an ambient power-enabled internet of things scenario), how to design location management (also referred to as mobility management) more adaptive to the passive internet of things (or the ambient power-enabled internet of things) is a problem to be resolved in this application.

It may be understood that embodiments of this application use the passive internet of things scenario as an example. Actually, embodiments of this application are not limited to being applied to the scenario, and may be applicable to the ambient power-enabled internet of things scenario, the ambient power-enabled internet of things scenario, an internet of things scenario, and the like. Alternatively, this application is applicable to any scenario in which the mobility management (or the location management) is needed.

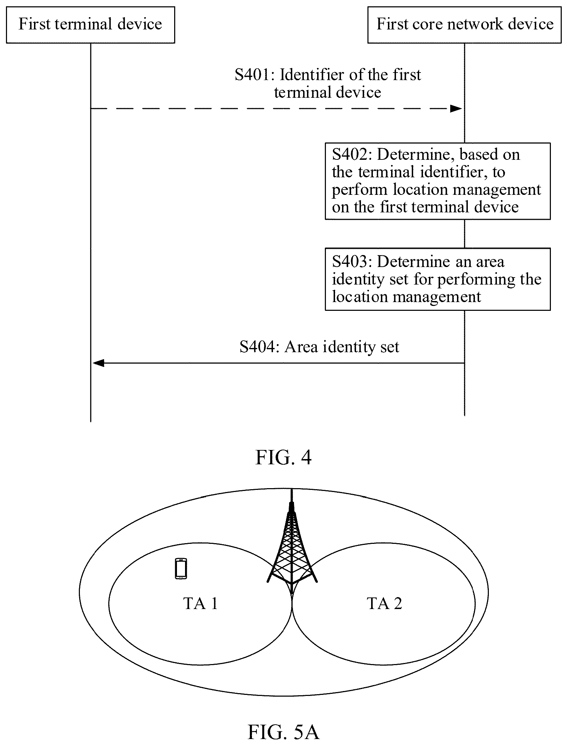

FIG. 4 is a flowchart of a location management method according to an embodiment of this application. The method includes the following steps.

**S401: A first core network device obtains a terminal identifier of a first terminal device.**

For example, the first terminal device sends the terminal identifier of the first terminal device, and the first core network device receives the terminal identifier of the first terminal device.

The first core network device may be a core network device responsible for terminal device location management, for example, may be the AMF shown in FIG. 3A, the newly added function (for example, the TMF, the AITMF, or the AIoTF) shown in FIG. 3B, or another core network device (for example, an LMF, a NEF, a PCF, or an SMF) responsible for the terminal device location management. This is not limited in this application.

The first terminal device may send the terminal identifier of the first terminal device to the first core network device via an access network device (specifically, for example, a first access network device). For example, the first terminal device sends the terminal identifier of the first terminal device to the first access network device. After receiving the terminal identifier of the first terminal device, the first access network device sends the terminal identifier of the first terminal device to the first core network device.

In some embodiments, identification information of the first terminal device sent by the first terminal device to the first core network device via the first access network device may be carried in a non-access stratum (non-access stratum, NAS) message. In other words, the first access network device directly forwards the NAS message to the first core network device. For example, the first terminal device sends the non-access stratum message to the first access network device via an access network (access network, AN) message. The first access network device extracts the NAS message from the AN message, encapsulates the NAS message by using a next generation application protocol (next generation application protocol, NGAP) message (also referred to as an N2 message), and sends the NGAP message to the AMF.

In some other embodiments, the terminal identifier of the first terminal device sent by the first terminal device to the first access network device and the terminal identifier of the first terminal device sent by the first access network device to the first core network device may be carried in different messages. For example, when the first core network device is the AMF, the terminal identifier of the first terminal device sent by the first terminal device to the first access network device is carried in an air interface message, and the terminal identifier of the first terminal device sent by the first access network device to the first core network device is carried in an N2 message. In other words, after receiving the air interface message, the first access network device does not directly forward the air interface message to the first core network device, but processes the air interface message into the N2 message and then sends the N2 message to the first core network device.

In some embodiments, the first terminal device may send the encrypted terminal identifier of the first terminal device. Accordingly, the first core network device receives the encrypted terminal identifier of the first terminal device. The first core network device obtains the terminal identifier of the first terminal device based on the encrypted terminal identifier of the first terminal device. For example, after receiving the encrypted terminal identifier of the first terminal device, the first core network device sends the encrypted terminal identifier of the first terminal device to a UDM or a UDR. The UDM or the UDR decrypts the encrypted terminal identifier of the first terminal device, and sends the terminal identifier to the first core network device. The first core network device receives the terminal identifier of the first terminal device from the UDM or the UDR.

In this embodiment of this application, the first terminal device may report the terminal identifier of the first terminal device to the first core network device in an initial registration procedure, a mobility registration update procedure, a wakeup procedure, a service request procedure, or the like. The terminal identifier of the first terminal device may be carried in a message (for example, a first message). It may be understood that types of the first message may vary with procedures. The mobility registration update procedure is used as an example. After random access succeeds, the first terminal device may send a first registration request message (that is, the first message is the first registration request message) to the first core network device via the first access network device. The first registration request message includes the terminal identifier of the first terminal device. It should be understood that the first access network device may forward, to the first core network device, the first registration request message received from the first terminal device. Alternatively, a message received by the first access network device from the first terminal device may be different from a message sent by the first access network device to the first core network device. For example, the first access network device may receive the first registration request message from the first terminal device via the AN message, encapsulate the first registration request message into the N2 message (that is, the N2 message includes the first registration request message), and then send the N2 message to the first core network device.

**S402: The first core network device determines, based on the terminal identifier of the first terminal device, to perform the location management on the first terminal device.**

In embodiments of this application, the location management is merely an example of a name, and may further be replaced with another name during actual application, for example, may also be referred to as mobility management, positioning management, a positioning service, a location tracking service, or another name. This is not limited in this application.

Specifically, the first core network device determines, based on the terminal identifier of the first terminal device, whether to perform the location management on the first terminal device, and performs S403 and S404 when determining to perform the location management on the first terminal device.

In a possible design, the first core network device may determine, based on one or more of the following, to perform the location management on the first terminal device:
**1. The location management needs to be performed on the first terminal device.**

That the location management needs to be performed on the first terminal device means that the first core network device needs to perform the location management on the first terminal device. For ease of description, in this specification, that the location management needs to be performed on the first terminal device may alternatively be replaced with that the first terminal device needs the location management, that there is a need to perform the location management on the first terminal device, or the like.

Specifically, the first core network device may determine, based on first information and/or second information, that the location management needs to be performed on the first terminal device, where the first information indicates that the location management needs to be performed on the first terminal device, and the second information indicates that a first service requester needs the location management. In a possible implementation, the first terminal device belongs to the first service requester, the first terminal device is a terminal device managed by the first service requester, or the first service requester manages the first terminal device. In another possible implementation, the first service requester is a service requester of the first terminal device, or the first service requester is a service requester that manages the first terminal device. For a specific form of the first service requester, refer to the foregoing descriptions of the service requester. For example, the first service requester is a functional entity (for example, a TMF or an AITMF) corresponding to an internet of things service, or a server (a specific form is, for example, an AF) of an enterprise that manages the first terminal device.

In a possible implementation, when the first terminal device belongs to a terminal device group created by the first service requester, the first terminal device belongs to the first service requester, the first terminal device is the terminal device managed by the first service requester, or the first service requester manages the first terminal device. For example, when the first service requester creates the terminal device group through dynamic creation or configuration, and the terminal device group includes the first terminal device, the first terminal device belongs to the first service requester, the first terminal device is the terminal device managed by the first service requester, or the first service requester manages the first terminal device.

In another possible implementation, when subscription data of the first terminal device includes information that represents the first service requester, for example, one or more of an identifier of the first service requester, slice information corresponding to the first service requester, a data network name corresponding to the first service requester, and a service identifier corresponding to the first service requester, the first terminal device belongs to the first service requester, the first terminal device is the terminal device managed by the first service requester, or the first service requester manages the first terminal device.

In another possible implementation, when subscription data or a service profile (for example, the service profile) corresponding to the first service requester includes information that represents the first terminal device, for example, the terminal identifier (for example, an SUPI, an SUCI, a GPSI, an IP address, and a MAC address) of the first terminal device and a group identifier corresponding to the first terminal device, the first terminal device belongs to the first service requester, the first terminal device is the terminal device managed by the first service requester, or the first service requester manages the first terminal device.

That the first service requester needs the location management may mean that the first core network device needs to perform the location management on a terminal device managed by the first service requester or the first service requester requests to perform the location management on the terminal device managed by the first service requester. For ease of description, in this specification, needing the location management may alternatively be replaced with requesting to perform the location management, subscribing to the location management, or the like.

In a possible design, the first information is indication information, and/or the second information is indication information.

For example, the first information indicates that the location management needs to be performed or the location management needs to be performed on a terminal device, and the first core network device may determine, based on the terminal identifier of the first terminal device and the first information, that the location management needs to be performed on the first terminal device. Alternatively, the first information indicates that the location management needs to be performed on the first terminal device. In a possible implementation, when the subscription data of the first terminal device includes the first information, the first information may indicate that the location management needs to be performed on the first terminal device.

For example, the second information indicates that the location management is needed, the second information indicates that the first service requester needs the location management, or the second information indicates that the location management needs to be performed on the terminal device managed by the first service requester. The first terminal device is one of at least one terminal device managed by the first service requester. In a possible implementation, when the subscription data or the service profile (for example, the service profile) corresponding to the first service requester includes the second information, the second information may indicate that the first service requester needs the location management or the location management needs to be performed on the terminal device managed by the first service requester.

In another possible design, the first information is the terminal identifier of the first terminal device in a terminal device list (also referred to as a terminal device identifier list), and/or the second information is the identifier of the first service requester in a service requester list (also referred to as a service requester identifier list). The terminal device list indicates one or more terminal devices on which the location management needs to be performed. For example, the terminal device list includes a terminal identifier of the one or more terminal devices on which the location management needs to be performed. The terminal identifier of the first terminal device in the terminal device list indicates that the location management needs to be performed on the first terminal device. The service requester list indicates an identifier of one or more service requesters that need the location management. For example, the service requester list includes the identifier of the one or more service requesters that need the location management. The service requester list includes the identifier of the first service requester, indicating that the first service requester needs the location management (in other words, that the location management needs to be performed on the terminal device managed by the first service requester). In a possible implementation, the terminal device list may include a terminal identifier of one or more terminal devices, and the service requester list may include an identifier of one or more service requesters.

In another possible design, the first information is a terminal device list (also referred to as a terminal device identifier list), and/or the second information is a service requester list (also referred to as a service requester identifier list). The terminal device list indicates one or more terminal devices on which the location management needs to be performed. For example, the terminal device list includes a terminal identifier of the one or more terminal devices on which the location management needs to be performed. When the terminal device list includes the terminal identifier of the first terminal device, it may indicate that the location management needs to be performed on the first terminal device. The service requester list indicates an identifier of one or more service requesters that need the location management. For example, the service requester list includes the identifier of the one or more service requesters that need the location management. When the service requester list includes the identifier of the first service requester, it may indicate that the first service requester needs the location management (in other words, the location management needs to be performed on the terminal device managed by the first service requester).

It may be understood that before determining, based on the first information and/or the second information, that the location management needs to be performed on the first terminal device, the first terminal device needs to first obtain the first information and/or the second information. The first information and/or the second information may be sent by the first service requester, may be sent by another core network device (for example, a second core network device), or may be pre-configured in the first core network device. A source of the first information and/or the second information is not limited in this embodiment of this application.

In a specific implementation, the first core network device obtains the first information and/or the second information from the subscription data or a service profile of the first terminal device.

The subscription data is used as an example:
For example, the subscription data is subscription data at a terminal device granularity. That is, the subscription data includes the subscription data of the first terminal device. The subscription data of the first terminal device includes the first information. The first information is indication information indicating that the location management needs to be performed, that the location management needs to be performed on the terminal device, or that the location management needs to be performed on the first terminal device. The first core network device may determine, based on the first information, that the location management needs to be performed on the first terminal device.

For example, the subscription data is subscription data at a service requester granularity. That is, the subscription data includes the subscription data of the first service requester. The subscription data of the first service requester includes the second information. The second information is indication information indicating that the location management is needed or indicating that the first service requester needs the location management. Alternatively, the subscription data of the first service requester includes a terminal identifier of the terminal device or a terminal device list. The terminal identifier of the terminal device or the terminal device list includes a terminal identifier of a terminal device on which the location management needs to be performed and that is in the terminal device managed by the first service requester, and the second information is identification information of the terminal device or the terminal device list.

It may be understood that, because the first terminal device is the terminal device managed by the first service requester, the first terminal device is limited by the subscription data of the first service requester. Therefore, in some embodiments, the subscription data of the first service requester may be used as the subscription data of the first terminal device.

For example, the subscription data includes both subscription data at a terminal device granularity and subscription data at a service requester granularity. For example, the subscription data includes the subscription data of the first terminal device and the subscription data of the first service requester. The subscription data of the first terminal device includes the first information. The first information is indication information indicating that the location management needs to be performed on the first terminal device. The subscription data of the first service requester includes the second information. The second information is indication information indicating that the first service requester needs the location management. Based on the first information and the second information, the first core network device determines to perform the location management on the first terminal device (or determines that the location management needs to be performed on the first terminal device).

For example, the subscription data includes the terminal device list. The terminal device list may include the terminal identifier of the one or more terminal devices. The terminal device list may represent the one or more terminal devices on which the location management needs to be performed. For example, the terminal device list includes the terminal identifier of the one or more terminal devices on which the location management needs to be performed. The first information is the terminal device list, or the first information is the terminal identifier of the first terminal device in the terminal list. The first core network device may obtain the terminal identifier of the first terminal device by querying or obtaining the terminal device list, or the first core network device determines, by querying or obtaining the terminal device list, that the terminal identifier of the first terminal device is included in the terminal list, thereby determining that the location management needs to be performed on the first terminal device.

For example, the subscription data includes the service requester list. The service requester list includes the identifier of the one or more service requesters that need the location management. The second information is the service requester list, or the second information is the identifier of the first service requester in the service requester list. The first core network device may obtain the identifier of the first service requester by querying or obtaining the service requester list, or the first core network device learns, by querying or obtaining the service requester list, that the identifier of the first service requester is included in the service requester list, thereby determining that the first service requester needs the location management. Specifically, the first core network device determines that the location management needs to be performed on the first terminal device managed by the first service requester.

For example, the subscription data includes the terminal device list, and the subscription data includes the service requester list. The first information is the terminal identifier of the first terminal device in the terminal device list. The second information is the identifier of the first service requester in the service requester list. The first core network device may determine, by querying the terminal device list and the service requester list, that the location management needs to be performed on the first terminal device and that the first service requester needs the location management.

For example, the subscription data includes a terminal device list and the service requester list. The terminal device list indicates the terminal devices managed by the first service requester. For example, the terminal device list includes a terminal identifier of the one or more terminal devices managed by the first service requester. The service requester list indicates the service requester that needs the location management. For example, the service requester list includes the identifier of the one or more service requesters that need the location management. The first information is the terminal device list (for example, the terminal identifier of the one or more terminal devices), and the terminal device list includes the terminal identifier of the first terminal device. The second information is the service requester list (for example, the identifier of the one or more service requesters), and the service requester list includes the identifier of the first service requester. The first core network device determines, based on the second information, that the first service requester needs to perform the location management. The first core network device determines, based on the first information, that the terminal device managed by the first service requester includes the first terminal device. Based on the first information and the second information, the first core network device determines to perform the location management on the first terminal device (or determines that the location management needs to be performed on the first terminal device).

It may be understood that, when the subscription data includes the first information and/or the second information, the first core network device needs to obtain the subscription data. In some embodiments, the first core network device may obtain the subscription data from the another core network device like the second core network device. The second core network device may be a network device that stores subscription data of a subscriber in an operator network, for example, a UDM or a UDR. This is not limited in this application. Optionally, after obtaining the subscription data from the second core network device, the first core network device may locally store a part or all of information of the subscription data, so that the first core network device can also directly read the subscription data locally.

In an implementation, the first core network device obtains the first information and/or the second information from locally configured (or stored) information. In a specific implementation, the first information and/or the second information are/is configured in the first core network device. In another specific implementation, context information (for example, a UE context) is locally stored in the first core network device, where the context information includes the first information and/or the second information.

It may be understood that, in embodiments of this application, being locally configured may be replaced with descriptions of being locally stored, being configured, or being pre-configured.

For example, the terminal device list is locally configured (or stored) in the first core network device. The terminal device list may include the terminal identifier of the one or more terminal devices. The terminal device list may represent the one or more terminal devices on which the location management needs to be performed. For example, the terminal device list includes the terminal identifier of the one or more terminal devices on which the location management needs to be performed. The first information is the terminal device list, or the first information is the terminal identifier of the first terminal device in the terminal list. The first core network device may obtain the terminal identifier of the first terminal device by querying the terminal device list, or the first core network device determines, by querying or obtaining the terminal device list, that the terminal identifier of the first terminal device is included in the terminal list, thereby determining that the location management needs to be performed on the first terminal device.

For example, the service requester list is locally configured (or stored) in the first core network device. The service requester list includes the identifier of the one or more service requesters that need the location management. The second information is the service requester list, or the second information is the identifier of the first service requester in the service requester list. The first core network device may obtain the identifier of the first service requester by querying or obtaining the service requester list, or the first core network device learns, by querying or obtaining the service requester list, that the identifier of the first service requester is included in the service requester list, thereby determining that the first service requester needs the location management. Specifically, the first core network device determines that the location management needs to be performed on the first terminal device managed by the first service requester.

For example, the terminal device list and the service requester list are locally configured (or stored) in the first core network device. The first information is the terminal identifier of the first terminal device in the terminal device list. The second information is the identifier of the first service requester in the service requester list. The first core network device may determine, by querying the terminal device list and the service requester list, that the location management needs to be performed on the first terminal device and that the first service requester needs the location management.

For example, the terminal device list and the service requester list are locally configured (or stored) in the first core network device. The terminal device list indicates the terminal devices managed by the first service requester. For example, the terminal device list includes the terminal identifier of the one or more terminal devices managed by the first service requester. The service requester list indicates the service requester that needs the location management. For example, the service requester list includes the identifier of the one or more service requesters that need the location management. The first information is the terminal device list (for example, the terminal identifier of the one or more terminal devices), and the terminal device list includes the terminal identifier of the first terminal device. The second information is the service requester list (for example, the identifier of the one or more service requesters), and the service requester list includes the identifier of the first service requester. The first core network device determines, based on the second information, that the first service requester needs to perform the location management. The first core network device determines, based on the first information, that the terminal device managed by the first service requester includes the first terminal device. Based on the first information and the second information, the first core network device determines to perform the location management on the first terminal device (or determines that the location management needs to be performed on the first terminal device).

During specific implementation, the locally configured (or stored) information may be locally configured (or stored) by a skilled person in advance, configured in the first core network device through network management, or locally configured (or stored) after being received by the first core network device from another device (for example, the UDM, the UDR, or the AF). This is not limited in this application.

In an implementation, the first core network device obtains the first information and/or the second information from the first service requester (for example, the AF), or the first core network device receives the first information and/or the second information from the first service requester.

In some embodiments, the first service requester may directly send the first information and/or the second information to the first core network. For example, the first service requester sends a second message to the first core network, where the second message includes the first information and/or the second information.

For example, the location management in this specification may be used as a service, for example, a location management service (it may be understood that the location management service is merely an example of a name, or may actually have another name, for example, a mobility management service, which is not limited in this application). The first service requester may send a service subscription request message (also referred to as a subscription request message or a service request message) to the first core network, where the service subscription request message is for subscribing to the location management service (in other words, for requesting the location management service). The service subscription request message (for example, the second message may be the service subscription request message) may include the first information and/or the second information. The first information indicates that the location management needs to be performed on the first terminal device, in other words, indicates to subscribe to the location management service for the first terminal device. The first information is specifically, for example, indication information or the terminal identifier of the first terminal device. The second information indicates that the first service requester needs the location management, in other words, indicates to subscribe to the location management service for the first service requester. The second information is specifically, for example, indication information or the identifier of the service requester.

In some other embodiments, the first service requester may send the first information and/or the second information to the first core network device via another device.

For example, the first service requester sends the first information and/or the second information to the second core network device (for example, a network element like a NEF, the UDM, or the UDR). The second core network device updates the subscription data (for example, the subscription data of the first terminal device and/or the subscription data of the first service requester) based on the first information and/or the second information that are/is sent by the first service requester. The second core network device sends updated subscription data to the first core network device, so that the first core network device can obtain the first information and/or the second information. In a possible implementation, the first service requester may send the first information and/or the second information to the second core network device via another core network device. For example, the first service requester (for example, the AF) may send the first information and/or the second information to the UDR (or the UDM) via a NEF. Optionally, before the second core network device sends the updated subscription data to the first core network device, the first core network device further subscribes to a subscription data change notification from the second core network device, so that the second core network device sends the updated subscription data to the first core network device when the subscription data is updated. For example, the first core network device sends a subscription data subscription request message to the second core network device, and the second core network device sends, based on the subscription data subscription request message, the updated subscription data to the first core network device when the subscription data is updated.

It may be understood that, when the first information or the second information is located in different devices, the first information or the second information may be in a same or different information forms. For example, when updating the subscription data based on the first information and/or the second information that are/is sent by the first service requester, the second core network device may directly store the first information and/or the second information in the subscription data, or may convert the first information and/or the second information into another form and then store the first information and/or the second information in the subscription data. This is not limited in this application.

In some other embodiments, the first core network device may determine the first information and/or the second information based on information sent by the first service requester. For example, the information sent by the first service requester is different from the first information and/or the second information, but the information sent by the first service requester may indicate that the location management needs to be performed on the first terminal device and/or that the first service requester needs the location management. For example, the first service requester sends a service subscription request message, where the message does not include either of the first information and the second information, but the message indicates to subscribe to a location management service. The first core network device may determine the first information and/or the second information based on the service subscription request message.

The foregoing describes the manners in which the first core network obtains the first information and/or the second information. It should be noted that a manner in which the first core network device obtains the first information may be the same as or different from a manner in which the first core network device obtains the second information. For example, the first core network device may obtain the first information via the subscription data, and obtain the second information via a message from the first service requester. In addition, when the manner in which the first core network device obtains the first information is the same as a manner in which the first core network device obtains the second information, the first information and the second information may be carried in a same message, or may be carried in different messages. This is not limited in this embodiment of this application.

In a possible implementation, the terminal identifier of the first terminal device may be in a plurality of different forms. For example, the terminal identifier sent by the first terminal device (namely, the terminal identifier that is received by the first core network from the first terminal device) in step S401 may be the same as or different from the terminal identifier used by the first core network device to determine to perform the location management on the first terminal device. For example, the terminal identifier sent by the first terminal device may be the encrypted terminal identifier, and the first core network device obtains the unencrypted (for example, decrypted) terminal identifier based on the encrypted terminal identifier. The first core network device determines, based on the unencrypted terminal identifier, to perform the location management on the first terminal device.

**2. The first terminal device supports the location management.**

It may be understood that, that the first terminal device supports the location management means that the first terminal device supports the first core network device in performing the location management on the first terminal device.

For example, that the first terminal device supports the location management may be understood as that the first terminal device supports initiation that is of an access procedure (for example, a tracking area update (tracking area update, TAU) procedure or the mobility registration update procedure) and that is performed based on an obtained area identity set. Specifically, when an area identity included in a broadcast message monitored by the first terminal device does not belong to any area identity in the area identity set obtained by the first terminal device, the first terminal device initiates the tracking area update procedure or the mobility registration update procedure. In a possible implementation, the area identity set includes one or more area identities.

In an implementation, the first core network device determines, based on capability information of the first terminal device, that the first terminal device supports the location management, where the capability information of the first terminal device indicates that the first terminal device supports the location management.

It may be understood that before determining, based on the capability information of the first terminal device, that the first terminal device supports the location management, the first core network device needs to first obtain the capability information of the first terminal device. The capability information of the first terminal device may be sent by the first terminal device, may be sent by a first service requester, may be sent by another core network device (for example, a second core network device), or may be pre-configured in the first core network device. A source of the capability information of the first terminal device is not limited in this embodiment of this application.

In some embodiments, the first terminal device may report the capability information of the first terminal device. For example, the first terminal device sends the capability information of the first terminal device to the first core network device; or the first terminal device sends the capability information of the first terminal device to the first access network device, and the first access network device sends the capability information of the first terminal device to the first core network device. The first terminal device may send the capability information of the first terminal device when sending the terminal identifier of the first terminal device, or the first terminal device may asynchronously send the terminal identifier of the first terminal device and the capability information of the first terminal device. This is not limited in this application. The first core network device receives the capability information from the first terminal device.

For example, the first terminal device sends the NAS message (for example, the first registration request message) to the first core network device via the first access network device, and uses the NAS message (for example, the first registration request message) to carry the terminal identifier of the first terminal device and the capability information of the first terminal device.

For another example, the first terminal device sends an RRC message to the first access network device, where the RRC message includes the capability information of the first terminal device. The first access network device sends the NGAP message to the first core network device, where the NGAP message includes the capability information of the first terminal device.

In some other embodiments, the terminal identifier of the first terminal device may indicate a capability of the first terminal device. For example, the capability information of the first terminal device may be included in the terminal identifier of the first terminal. For example, a part of a field of the terminal identifier of the first terminal device may indicate the capability of the first terminal device. The field may be one or more of a character string, a number, or a bit. For example, the part of the field of the terminal identifier may indicate whether the terminal device supports the location management. When the terminal device supports and does not support the location management, the field has different values. Alternatively, for example, when the first terminal device supports the location management, the terminal identifier of the first terminal device may include a field indicating that the location management is supported. When the first terminal device does not support the location management, the terminal identifier of the first terminal device does not include a field indicating that the location management is supported. The first core network device may learn, based on the terminal identifier (for example, the terminal identifier of the first terminal device), that the first terminal device supports the location management.

In some other embodiments, subscription data (for example, subscription data of the first terminal device and/or subscription data of the first service requester) includes the capability information of the first terminal device, and the first core network device may determine the capability information of the first terminal device in the subscription data. For a manner in which the first core network device obtains the subscription data, refer to the foregoing related descriptions. Details are not described herein again.

In some other embodiments, the capability information of the first terminal device is locally configured (or stored) in the first core network device, and the first core network device locally reads the capability information of the first terminal device. Optionally, the capability information of the first terminal device may be locally configured (or stored) by a skilled person in advance, configured through network management, or locally configured (or stored) by the first core network device after being sent by another device (for example, the first terminal device, the UDM, the UDR, or an AF) to the first core network device. This is not limited in this application.

In another implementation, the first core network device determines, based on type information of the first terminal device, that the first terminal device is of a first type, where the type information of the first terminal device indicates that the first terminal device is of the first type.

Different types of terminal devices have different capabilities. Capability information (that is, whether the location management is supported) of the first terminal device may be determined based on the type information of the first terminal device. For example, type information of the terminal devices may include an active terminal device, a passive terminal device, a semi-passive terminal device, and the like. The passive terminal device or the semi-passive terminal device does not have a capability of active communication, and the passive terminal cannot record status information after a power failure. Therefore, the passive terminal device and the semi-passive terminal device do not support the location management in terms of capabilities. The active terminal device has the capability of active communication, can record status information after a power failure, and therefore supports the location management in terms of a capability. Therefore, the first type may be the active terminal device. Certainly, this is merely an example. Actually, the type information of the terminal devices is not limited thereto, and the first type is not limited to the active terminal device.

Before determining, based on the type information of the first terminal device, that the first terminal device is of the first type, the first core network device needs to first obtain the type information of the first terminal device. For a specific implementation in which the first core network device obtains the type information of the first terminal device, refer to the specific implementation in which the first core network device obtains the capability information of the first terminal device.

**3. The first terminal device is located in an area for performing the location management.**

That the first terminal device is located in the area for performing the location management may alternatively be described as that the first terminal device is located in an area in which the location management needs to be performed, that the first terminal device is located in an area that needs the location management, that the first terminal device is located in an area in which the location management needs to be performed on a terminal device, or the like.

In a possible implementation, the first core network device obtains first location information. The first core network device determines, based on the first location information, that the first terminal device is located in the area in which the location management needs to be performed. The first location information indicates an area in which the first terminal device is located, or the first location information is an area identity of an area in which the first terminal device is located.

In some embodiments, the first core network device may determine the first location information based on the access network device (for example, the first access network device) connected to the first terminal device. For example, the first core network device obtains location information of at least one access network device (including the first core network device). The first terminal device sends the terminal identifier of the first terminal device (for example, the first registration request message, where the first registration request message includes the terminal identifier of the first terminal device) to the first core network device via the first access network device, and the first core network device receives, via the first access network device, the terminal identifier of the first terminal device sent by the first terminal device. The first core network device determines the first location information based on location information of the first access network device (for example, a cell identity, a tracking area identity corresponding to the first access network device, or an identifier of the first access network device). For example, after receiving the terminal identifier of the first terminal device from the first access network device, the first core network device determines that the first terminal device is located within a location corresponding to the first access network device, and determines the location information of the first access network device as the first location information.

During specific implementation, the first location information may be one or more of an identifier of the access network device (for example, a gNB identifier or a global RAN node ID), a cell identity, a geographical location identifier (for example, a coordinate value or longitude and latitude), a TAI, a closed access group (closed access group, CAG) identifier, a reader/writer (also referred to as reader) identifier, a user equipment identifier (for example, a generic public subscription identifier (generic public subscription identifier, GPSI), a subscription concealed identifier (subscription concealed identifier, SUCI), or a subscription permanent identifier (subscription permanent ID, SUPI)), and the like. In a possible implementation, the user equipment identifier may be an identifier (for example, a GPSI, an SUCI, or an SUPI) of a terminal device used as a reader.

In an implementation, the first core network device obtains the first location information and second location information. The first core network device determines, based on the first location information and the second location information, that the first terminal device is located in the area in which the location management needs to be performed, where the first location information indicates the area in which the first terminal device is located, and the second location information indicates the area in which the location management needs to be performed.

It may be understood that before determining, based on the first location information and the second location information, that the first terminal device is located in the area for performing the location management, the first terminal device needs to first obtain the first location information and the second location information. For a manner of obtaining the first location information, refer to the foregoing descriptions. The second location information may be sent by a first service requester, may be sent by another core network device (for example, a second core network device), or may be pre-configured in the first core network device. A source of the second location information is not limited in this embodiment of this application.

In some embodiments, the second location information includes at least one of the following, or the second location information is determined based on at least one of the following: location information locally configured in the first core network device, location information specified in a protocol, location information in subscription data, or location information provided by the first service requester. This is not limited in this application.

The location information locally configured in the first core network device may include location information of the area for performing the location management and/or location information of an area not for performing the location management. The location information specified in the protocol may include the location information of the area for performing the location management and/or the location information of the area not for performing the location management. The location information provided by the first service requester may include the location information of the area for performing the location management and/or the location information of the area not for performing the location management. The location information in the subscription data may include the location information of the area for performing the location management and/or the location information of the area not for performing the location management. Optionally, the location information provided by the first service requester may further include location information of an area for executing an operation instruction. Optionally, the location information in the subscription data may further include the location information of the area for executing the operation instruction.

In an example, the first service requester sends a service request message to the first core network device, where the service request message carries an instruction and location information (namely, the location information provided by the first service requester), a type of the instruction includes but is not limited to one or more of inventory, read, write, kill, position, and the like, and the location information indicates an area in which the instruction needs to be executed. The location information locally configured in the first core network device or the location information (namely, the second location information) in the subscription data includes a first-type area and a second-type area. The first-type area may represent the area (for example, a non-public network area or an indoor area) in which the location management does not need to be performed, and the second-type area may represent the area (for example, a public network area or an outdoor area) in which the location management needs to be performed. When an area (namely, the area for executing the instruction) indicated by the location information (for example, an identifier of an area located in a first public network) provided by the first service requester is the second-type area, and the first terminal device is located in the area for executing the instruction, the location management needs to be performed on the first terminal device. When an area (namely, the area for executing the instruction) indicated by the location information provided by the first service requester is the first-type area, and the first terminal device is located in the area for executing the instruction, the location management does not need to be performed on the first terminal device.

For example, the area for performing the location management may be one or more of one or more public land mobile network (public land mobile network, PLMN) areas, one or more specific PLMN areas, one or more non-public network (non-public network) areas, one or more specific NPN areas, one or more geographical location areas (for example, specified coordinates or longitude and latitude), an area corresponding to one or more tracking areas, an area corresponding to one or more cells, and an area corresponding to one or more closed groups (closed access groups, CAGs), an area corresponding to one or more readers/writers, an area corresponding to one or more access network devices, an area corresponding to one or more user equipments, and the like. In a possible implementation, the area corresponding to the one or more cells may be understood as an area covered by the one or more cells; the area corresponding to the one or more closed groups may be understood as an area corresponding to an access network device that broadcasts the one or more closed groups; the area corresponding to the one or more readers/writers may be understood as an area covered by the one or more readers/writers; the area corresponding to the one or more access network devices may be understood as an area covered by the one or more access network devices; the user equipment may be understood as a user equipment that can be used as a reader (or a reader/writer); and the area corresponding to the one or more user equipments may be understood as an area covered by the one or more user equipments.

Correspondingly, the second location information may be one or more of a PLMN identifier, a geographical location identifier (for example, a coordinate value or longitude and latitude), a TAI, a cell identity (for example, a cell ID), a CAG identifier, a reader/writer identifier, an access network device identifier (for example, a RAN identifier or a gNodeB identifier), a user equipment identifier (for example, a GPSI, an SUCI, or an SUPI), or the like.

In an example, the non-public network (non-public network, NPN), also referred to as a campus network, a local area network, or a private network, is usually a campus, and has a smaller range. A movement range of the terminal device is limited. Therefore, the location management may be omitted to reduce network overheads. A PLMN, referred to as a public network for short, has a larger range. Therefore, the location management may be performed on the terminal device in the public network. It may be understood that the foregoing several manners are merely examples. This is actually not limited thereto.

Optionally, the second location information is a preset route (it may be understood that the preset route is merely an example of a name, and may also be referred to as another name like a preset line, line information, route information, an expected trajectory, or trajectory information, which is not limited). The preset route is a route on which the first terminal device is expected, required, or indicated by the first service requester to move.

In a possible implementation, the preset route may include one or more area identities, and an area indicated by the one or more area identities corresponds to a movement route of the first terminal device. The one or more area identities are specifically, for example, one or more of one or more PLMN identifiers, one or more TAIs, one or more cell identities (for example, cell IDs), one or more CAG identifiers, one or more reader/writer identifiers, one or more access network device identifiers (for example, RAN identifiers or gNodeB identifiers), one or more user equipment identifiers (for example, GPSIs, SUCIs, or SUPIs).

In another possible implementation, the preset route may include one or more pieces of geographical location information (for example, coordinate values or longitude and latitude). A core network device (for example, the first core network device or another core network device) may determine one or more area identities based on the one or more pieces of geographical location information in the preset route, for example, convert the one or more pieces of geographical location information into the one or more area identities (for example, convert a coordinate value into a TAI).

In an internet of things scenario, a service requester usually requires the terminal device to move based on the preset route. Therefore, the first core network device determines, based on the preset route (in other words, an area corresponding to the preset route), to perform the location management on the first terminal device. In this way, the location management may be performed on the terminal device only on the preset route (in other words, in the area corresponding to the preset route), so that power consumption can be reduced.

**4. A current time point is within a time period for performing the location management.**

The time period for performing the location management may alternatively be described as a time period in which the location management needs to be performed, a time period that needs the location management, or the like.

In a possible implementation, first time information indicates the time period for performing the location management. The first time information may be sent by a first service requester, may be sent by another core network device (for example, a second core network device), or may be pre-configured in the first core network device. A source of the first time information is not limited in this embodiment of this application.

It may be understood that, when the first service requester sends the first time information to the first core network device, the first time information may be carried in the second message (for example, a service subscription request message), or may be carried in another message. This is not limited in this embodiment of this application.

The first core network device may determine, based on the terminal identifier when the current time point is within the time period indicated by the first time information, to perform the location management on the first terminal device. Optionally, the first time information may include one or more of a start time point, duration, and an end time point.

For example, subscription data sent by the second core network device includes the first time information, and the first time information indicates the time period for performing the location management. The first core network device may determine, based on the terminal identifier when the current time point is within the time period indicated by the first time information, to perform the location management on the first terminal device.

In this embodiment of this application, the foregoing several manners may be separately implemented, or may be implemented in combination with each other. The following lists several possible specific implementations.

Example 1: The first core network device receives the terminal identifier from the first terminal device (for example, receives the first registration request message, where the first registration request message carries the terminal identifier of the first terminal device). The first core network device obtains the subscription data of the first terminal device from the second core network device based on the terminal identifier of the first terminal device, where the subscription data includes at least one of the first information, the second information, or the capability information of the terminal device. The first core network device determines, based on the subscription data, to perform the location management on the first terminal device.

Example 2: The first core network device receives the terminal identifier and the capability information from the first terminal device (for example, receives the first registration request message, where the first registration request message carries the terminal identifier and the capability information of the first terminal device). The first core network device obtains the subscription data of the first terminal device from the second core network device based on the terminal identifier of the first terminal device, where the subscription data includes the first information and/or the second information. The first core network device determines, based on the subscription data and the capability information of the first terminal device, to perform the location management on the first terminal device.

Example 3: The first core network device receives the terminal identifier and the capability information of the first terminal device from the first terminal device (for example, receives the first registration request message, where the first registration request message carries the terminal identifier and the capability information of the first terminal device). The first core network device determines, based on the capability information of the first terminal device (for example, the capability information indicates that the first terminal device supports the location management), to perform the location management on the first terminal device. Alternatively, the first core network device receives the terminal identifier from the first terminal device, where the terminal identifier includes the capability information of the first terminal device. The first core network device determines, based on the capability information of the first terminal device, to perform the location management on the first terminal device.

Example 4: The first core network device receives the terminal identifier from the first terminal device (for example, receives the first registration request message, where the first registration request message carries the terminal identifier of the first terminal device). The first core network device obtains the locally configured (or stored) information, where the locally configured (or stored) information includes one or more of the terminal device list, the service requester list, and the capability information of the first terminal device. The first core network device determines, based on one or more of the terminal device list, the service requester list, and the capability information of the first terminal device, to perform the location management on the first terminal device.

Example 5: The first core network device receives the terminal identifier from the first terminal device (for example, receives the first registration request message, where the first registration request message carries the terminal identifier of the first terminal device). The first core network device receives the first information and/or the second information from the first service requester (for example, receives the service subscription request message, where the service subscription request message includes the first information and/or the second information). The first core network device determines, based on the first information and/or the second information, to perform the location management on the first terminal device.

Certainly, the foregoing several combinations are merely examples. This is actually not limited thereto.

**S403: The first core network device determines the area identity set for performing the location management.**

The area identity set may represent one or more areas. For example, the area identity set may include the one or more area identities, where the area identity indicates the area, and different area identities indicate different areas. Correspondingly, the area identity set indicates the one or more areas.

The area identity set for performing the location management may be understood as an area identity set used when the location management is performed. That is, the area identity set is for performing the location management.

In a possible implementation, that the area identity set is for performing the location management may be that the first terminal device initiates a procedure like the tracking area update procedure or the mobility registration update procedure based on the area identity set, so that a network obtains current location information of the first terminal device.

For example, the first terminal device initiates the tracking area update procedure or the mobility registration update procedure based on the area identity set. A specific implementation may be as follows: After the first terminal device leaves the area represented by the area identity set, the first terminal device initiates the mobility registration update procedure or the tracking area update procedure. For example, when the area identity included in the broadcast message monitored by the first terminal device does not belong to the any area identity in the area identity set obtained by the first terminal device (it indicates that the first terminal device has left the area represented by the area identity set), the first terminal device initiates the tracking area update procedure or the mobility registration update procedure.

The first terminal device may initiate, based on the area identity set, the access procedure to the network after leaving the area represented by the area identity set, so that the network learns of a current location of the first terminal device. Therefore, the area identity set may be for performing the location management.

It may be understood that the area identity set for performing the location management does not represent that the location management is performed only in the area corresponding to the area identity set.

In a possible implementation, the first core network device may determine the area identity set based on the area in which the first terminal device is located. For example, in S401, if the first core network device receives the terminal identifier of the first terminal device from the first access network device, it may be determined that the first terminal device is located within coverage of the first access network device, and then the area identity set is determined based on an area (which may be one or more areas) corresponding to the first access network device. For example, the area corresponding to the first access network device may be one or more tracking areas (for example, one or more tracking areas supported by the first access network device), and the first core network device may enable one or more tracking area identities corresponding to the first access network device to constitute the area identity set (for example, a TAI list). Alternatively, the first core network device may enable one or more tracking area identities corresponding to the first access network device and a tracking area identity corresponding to another area adjacent to the first access network device to constitute the area identity set (for example, a TAI list).

For example, FIG. 5A shows an example of coverage of a first access network device. If the coverage of the first access network device (for example, a base station) includes two tracking areas, namely, a TA 1 and a TA 2 (area identities are respectively a TAI 1 and a TAI 2), an area identity set may be {TAI 1}, {TAI 2}, or {TAI 1, TAI 2}. It may be understood that FIG. 5A is merely some examples of a TA, and does not represent a real size or shape of the TA.

In another possible implementation, the first core network device may obtain the preset route, and determine, based on an area that covers a part or all of the preset route, the area identity set for performing the location management, where the area identity set includes an area identity of the area that covers the part or all of the preset route.

The preset route may be sent by the first service requester, may be sent by the another core network device (for example, the second core network device), or may be pre-configured in the first core network device. A source of the preset route is not limited in this embodiment of this application. It may be understood that, when the first service requester sends the preset route to the first core network device, the preset route may be carried in the second message (for example, the service subscription request message), or may be carried in the another message. This is not limited in this embodiment of this application.

Information in the preset route may be the same as information in the area identity set. For example, the preset route may include the one or more area identities, and the area indicated by the one or more area identities corresponds to the movement route of the first terminal device. The first core network device uses the preset route as the area identity set. That is, the area identity in the preset route is the area identity in the area identity set. The area identity specifically includes, for example, but is not limited to, the PLMN identifier, the TAI, the cell identity (for example, the cell ID), the CAG identifier, the reader/writer identifier, the access network device identifier (for example, the RAN identifier or the gNodeB identifier), and the user equipment identifier (for example, the GPSI, the SUCI, or the SUPI).

Information in the preset route may be different from information in the area identity set. For example, the preset route includes the one or more pieces of geographical location information (for example, the coordinate value or longitude and latitude). The first core network device determines the area identity set based on the preset route. For example, the first core network device may convert the one or more pieces of geographical location information in the preset route into the one or more area identities (for example, convert the coordinate value into the TAI). The area identity obtained through conversion is the area identity in the area identity set.

During specific implementation, the first core network device may send, to the first terminal device, an area identity corresponding to an area that covers all of the preset route (that is, the first core network device determines, based on the area that covers all of the preset route, the area identity set for performing the location management); or the first core network device may send, to the first terminal device, an area identity corresponding to an area on the part of the preset route (for example, the first core network device divides the preset route into a plurality of segments, delivers area identities a plurality of times, and delivers an area identity corresponding to one of the segments of route each time).

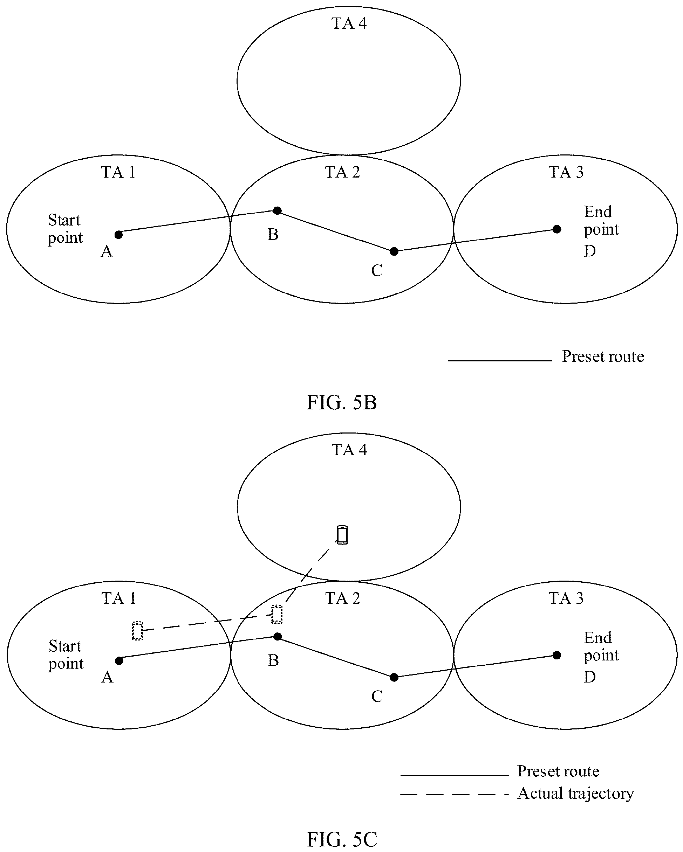

For example, FIG. 5B is an example of a preset route. The preset route sequentially includes a location point A (a start point), a location point B, a location point C, and a location point D (an end point), where the location point A is located in a TA 1, both the location point B and the location point C are located in a TA 2, and the location point D is located in a TA 3. Area identities of the TA 1, the TA 2, and the TA 3 are respectively a TAI 1, a TAI 2, and a TAI 3. In this case, an area identity set may be {TA 1, TA 2, TA 3}, {TA 1, TA 2}, {TA 1}, or the like. It may be understood that FIG. 5B is merely some examples of a TA, and does not represent a real size or shape of the TA.

**S404: The first core network device sends the area identity set to the first terminal device. Accordingly, the first terminal device receives the area identity set.**

For example, the first core network device may send a first registration accept message to the first terminal device after authentication and/or authorization on the first terminal device succeed/succeeds, where the first registration accept message includes the area identity set. Similarly, the first core network device may send the first registration accept message to the first terminal device via the first access network device.

Optionally, after receiving the area identity set, the first terminal device may store the area identity set, and initiate the procedure like the tracking area update procedure or the mobility registration update procedure based on the area identity set. For example, in a movement process, the first terminal device monitors a cell broadcast message, obtains an area identity in the cell broadcast message after receiving the cell broadcast message, and compares the area identity with the area identity in the area identity set. If no area identity in the area identity set is the same as the area identity in the cell broadcast message, or if any area identity included in the broadcast message is not the same as the area identity in the area identity set, it indicates that the first terminal device moves out of the area corresponding to the area identity set, and the first terminal device may initiate the tracking area update procedure or the mobility registration update procedure to the network, so that the network (or a core network) obtains the current location information of the first terminal device. For example, the first core network device is notified that the first terminal device moves out of the area corresponding to the area identity set, so that the first core network device determines a new area identity set for the first terminal device.

The mobility registration update procedure is used as an example. The first terminal device sends a third registration request message to the first core network device via second access network device (for example, the first terminal device initiates random access to a new access network device (for example, the second access network device), and sends the third registration request message to the first core network device via the second access network device after the random access succeeds), where the third registration request message carries the terminal identifier of the first terminal device. For a subsequent method performed by the first core network device, refer to the method performed after the first core network device receives the first registration request message. Details are not described herein again.

In the foregoing solution, after receiving the terminal identifier of the first terminal device, the first core network device needs to determine whether to perform the location management on the first terminal device, and sends, to the first terminal device only when determining to perform the location management on the first terminal device, information (for example, the area identity set) for performing the location management. In this way, the core network can perform the location management on the terminal device based on a requirement (for example, perform the location management on a terminal that satisfies at least one of supporting the location management, needing the location management, and being located in the area that needs the location management) instead of blindly performing the location management on all terminals, so that the network overheads (for example, context maintenance costs) can be reduced, and location management efficiency can be improved.

In a possible design, when the first core network device determines, based on the area that covers the part or all of the preset route, the area identity set for performing the location management, if the first terminal device moves out of the area corresponding to the area identity set, the first terminal device reports the terminal identifier of the first terminal device to the first core network device via an access network device (for example, the second access network device). After receiving the terminal identifier of the first terminal device from the second access network device, the first core network device may determine, based on location information of the second access network device, the area in which the first terminal device is located. If the first terminal device deviates from the preset route (for example, the area in which the first terminal device is located does not belong to an area on the preset route), the first core network device may report, to the first service requester, that a location of the first terminal device is abnormal, for example, send third information to the first service requester, where the third information indicates that the location of the first terminal device is abnormal. Optionally, the third information specifically indicates that the first terminal device deviates from the preset route. When a location of the first terminal device is normal, the first core network device may not report third information, or reports the location information of the first terminal device and/or information indicating that the location is normal. For example, when the area in which the first terminal device is located belongs to the preset route, the first core network device sends eighth information to the first service requester, where the eighth information indicates that the location of the first terminal device is normal (or does not deviate from the preset route).

For example, FIG. 5C shows an example of an actual movement trajectory of a first terminal device. A preset route is A→B→C→D, and corresponding TAs are a TA 1→a TA 2→a TA 3. An area identity set received by the first terminal device is, for example, {TAI 1, TAI 2, TAI 3}. The actual trajectory of the first terminal device is the TA 1→the TA 2→a TA 4. When the first terminal device is in the TA 1, a TA identity obtained by the first terminal device through monitoring in a cell broadcast message is the TAI 1, which is one of {TAI 1, TAI 2, TAI 3}. Therefore, reporting is not performed. When the first terminal device is in the TA 2, a TA identity obtained by the first terminal device through monitoring in a cell broadcast message is the TAI 2, which is one of {TAI 1, TAI 2, TAI 3}. Therefore, reporting is not performed. After the first terminal device enters the TA 4, a TA identity obtained by the first terminal device through monitoring in a cell broadcast message is a TAI 4, which is not any one of {TAI 1, TAI 2, TAI 3}. The first terminal device reports a location update (for example, sends the third registration request message, where the message carries the terminal identifier of the first terminal device) to the first core network device. The first core network device may determine, based on the location information of the second access network device, the area in which the first terminal device is located, thereby determining that the first terminal device deviates from the preset route.

According to the foregoing design, when the first terminal device deviates from the preset route, the network (for example, the core network) can notify the first service requester, so that the first service requester can discover a route error of the first terminal device in time, to reduce transportation costs caused by the route error. For example, in a logistics scenario, the first terminal device is a transportation tool, or the first terminal device is attached to an item and logistics transportation is performed via a transportation tool. In a transportation process, the first service requester (for example, an application function, a third party, or an enterprise) expects that the network can perform the location management on the item. In the foregoing design manner, when a transportation path is abnormal, the first service requester can discover in time that the transportation path is abnormal, to avoid discovery that is only after the item arrives at an incorrect end point.

In a possible design, the first core network device determines whether the first terminal device arrives at a target location by a time point indicated by second time information. When the first terminal device does not arrive at the target location by the time point indicated by the second time information, the first core network device may send fourth information to the first service requester, where the fourth information indicates that the location of the first terminal device is abnormal. Optionally, the fourth information specifically indicates that the first terminal device does not arrive at the target location by a specified time point (for example, the time point indicated by the second time information). When the location of the first terminal device is normal, the first core network device may not perform reporting, or reports that the location of the first terminal device is normal. For example, when the first terminal device arrives at the target location by a specified time point, the first core network device sends ninth information to the first service requester, where the ninth information indicates that the location of the first terminal device is normal (or the first terminal device arrives at the target location by the specified time point).

Location information of the target location and/or the second time information may be sent by the first service requester, may be sent by the another core network device (for example, the second core network device), or may be pre-configured in the first core network device. A source of the location information of the target location and/or the second time information is not limited in this embodiment of this application. It may be understood that, when the first service requester sends the location information of the target location and the second time information to the first core network device, the location information of the target location and the second time information may be carried in the second message (for example, the service subscription request message), or may be carried in the another message. This is not limited in this embodiment of this application.

The second time information indicates a time point at which the first terminal device arrives at the target location (for example, a time point at which the first terminal device is expected, required, or indicated by the first service requester to arrive at the target location). The second time information may be different from the first time information, or the second time information is included in the first time information (for example, the first time information includes the start time point and the end time point, and the second time information is the end time point). This is not limited in this application.

The following lists several specific implementations in which the first core network device determines that the first terminal device does not arrive at the target location by the time point indicated by the second time information.

Example 1: The first core network device may send paging information (also referred to as a paging message) to one or more access network devices (for example, all access network devices connected to the first core network device) by the time point indicated by the second time information, where the paging information indicates to page the first terminal device, and the paging information includes the terminal identifier of the first terminal device. If the first terminal device is successfully paged by an access network device, the access network device reports the terminal identifier of the first terminal device to the first core network device. For example, the first core network device receives the terminal identifier of the first terminal device from a third access network device (it indicates that the first terminal device is successfully paged by the third access network device). The first core network device may determine that the first terminal device is located in an area corresponding to location information of the third access network device, so that the first core network device can determine, based on the location information of the third access network device and the location information of the target location, whether the first terminal device is located at the target location. If the first terminal device is located at the target location, the first core network device may determine that the first terminal device arrives at the target location by the time point indicated by the second time information. If the first terminal device is not located at the target location, the first core network device may determine that the first terminal device does not arrive at the target location by the time point indicated by the second time information.

Example 2: The first core network device may send, by the time point indicated by the second time information, paging information to one or more access network devices corresponding to the target location, where the paging information indicates to page the first terminal device, and the paging information includes the terminal identifier of the first terminal device. The first core network device determines, depending on whether the terminal identifier of the first terminal device is received from any one of the one or more access network devices corresponding to the target location, whether the first terminal device arrives at the target location by the time point indicated by the second time information. For example, if the first core network device does not receive, by the time point indicated by the second time information, the terminal identifier of the first terminal device from any access network device corresponding to the target location, the first core network device determines that the first terminal device does not arrive at the target location by the time point indicated by the second time information.

In some embodiments, paging the first terminal device may be performing a stocktaking operation or an inventory operation on the first terminal device.

It may be understood that, in this embodiment of this application, a same terminal device may have a plurality of terminal identifiers in different forms. In different procedures or different messages, terminal identifiers of the same terminal device may be the same, or may be different. This is not limited in this embodiment of this application. For example, in some messages or procedures, the terminal identifier may be an SUCI, a 5G-GUTI, or a TMSI. In other messages or procedures, the terminal identifier may be an SUPI or a GPSI. For example, a first terminal identifier (for example, the terminal identifier in the paging information) used in a paging process may be different from the terminal identifier (for example, the terminal identifier in S401) that is of the first terminal device and that is used in the location management. For example, the terminal identifier in S401 may be a permanent identifier (for example, an SUCI, which is an encrypted permanent identifier), or may be a temporary identifier. This depends on whether the first terminal device stores a temporary identifier previously allocated by the AMF (if the temporary identifier is stored, the first terminal device reports the temporary identifier; or if the temporary identifier is not stored, the first terminal device reports the permanent identifier). The terminal identifier in the paging information is usually the temporary identifier of the terminal device.

Example 3: The area identity set determined in step S403 may not include an area identity of an area that covers the target location. For example, if the target location is an end point shown in FIG. 5C, the area identity set may be {TA 1, TA 2}. After receiving the terminal identifier of the first terminal device from a third access network device, the first core network device may determine, based on location information of the third access network device, that the area in which the first terminal device is located is the area (for example, the TA 4) that covers the target location, and then determine, based on the current time point and the second time information, whether the first terminal device arrives at the target location by the time point indicated by the second time information. For example, if the current time point is before/at the time point indicated by the second time information, the first core network device determines that the first terminal device arrives at the target location by the time point indicated by the second time information; or if the current time point has exceeded the time point indicated by the second time information, the first core network device determines that the first terminal device does not arrive at the target location by the time point indicated by the second time information.

Certainly, the foregoing two examples are merely examples. This is actually not limited thereto.

According to the foregoing design, the first service requester may learn in time that the first terminal device does not arrive at a specified location by the specified time point and/or discover the route error of the first terminal device in time, to reduce the transportation costs caused by the error.

In a possible design, when determining that the first terminal device is located at a same location or in a same area for more than a period of time, the first core network device may report abnormality to the first service requester, for example, send fifth information to the first service requester, where the fifth information indicates that the location of the first terminal device is abnormal.

In an implementation, third time information indicates duration. The duration may be maximum duration (also referred to as preset duration) for which the first terminal device is located in the same area. The third time information may be different from the first time information, or the third time information may be included in the first time information. This is not limited in this application.

Similarly, the third time information may be sent by the first service requester, may be sent by the another core network device (for example, the second core network device), or may be pre-configured in the first core network device. A source of the third time information is not limited in this embodiment of this application. It may be understood that, when the first service requester sends the third time information to the first core network device, the third time information may be carried in the second message (for example, the service subscription request message), or may be carried in the another message. This is not limited in this embodiment of this application.

The following lists several specific manners in which the first core network device determines that the first terminal device is located at the same location for more than the preset duration.

Example 1: The first core network device may send the paging information via the one or more access network devices (for example, all the access network devices connected to the first core network device), where the paging information is for paging the first terminal device, and the paging information includes the terminal identifier of the first terminal device. If duration (or a time difference) for which the first core network device receives the terminal identifier of the first terminal device from a same access network device a plurality of times (or a plurality of consecutive times) exceeds the preset duration, the first core network device determines that the first terminal device is located at the same location (namely, an area in which the access network device is located) for more than the preset duration. For example, a time point at which the first core network device receives the terminal identifier of the first terminal device from an access network device A is a timestamp A, and a time point at which the first core network device receives the terminal identifier of the first terminal device from the access network device A again is a timestamp B. When a time difference between the timestamp B and the timestamp A exceeds (or is equal to) the preset duration, it may be considered that the first terminal is located at the same location for more than the preset duration. For another example, a time point at which the first core network device receives the terminal identifier of the first terminal device from an access network device A is a timestamp A. When the first core network device still receives the terminal identifier of the first terminal device from the access network device A at a timestamp B, it may be considered that the first terminal is located at the same location for more than the preset duration, where a time difference between the timestamp B and the timestamp A exceeds (or is equal to) the preset duration.

Example 2: The first core network device periodically sends the paging information to one or more access network devices based on the preset duration, where the paging information is for paging the first terminal device, and the paging information includes the terminal identifier of the first terminal device. If the terminal identifier of the first terminal device is received from a same access network device a plurality of times or a quantity of times the terminal identifier of the first terminal device is received from the same access network device exceeds (or is equal to) a specified quantity of times or a specified threshold, the first core network device determines that the first terminal device is located at the same location for more than the preset duration. For example, the first core network device may periodically send the paging information to the one or more access network devices based on preset duration (for example, the preset duration is used as a single periodicity). If the first core network device receives the terminal identifier of the first terminal device from the same access network device a plurality of times, it indicates that the first terminal device is located in an area corresponding to the access network device for more than the preset duration.

Example 3: The area identity set determined in S403 includes the area identity of the area that covers the part of the preset route. If the first core network device does not receive the terminal identifier of the first terminal device from any access network device for more than the preset duration, or if the first core network device does not receive, for more than the preset duration, the terminal identifier of the first terminal device from any access network device outside the area represented by the area identity set, the first core network device may determine that the first terminal device is located at the same location for more than the preset duration (that is, the first terminal device is always located on the part of the route, and does not enter a next segment of the route).

Certainly, the foregoing two examples are merely examples. This is actually not limited thereto.

According to the foregoing design, the first service requester may discover in time that the first terminal device is located at the same location for more than the preset duration, so that the first service requester checks in time whether the first terminal device is dropped during movement or whether a transport tool for transporting the first terminal device is faulty.

It may be understood that, when the first core network device obtains any plurality of pieces of information in the first information, the second information, the second location information, the preset route, the location information of the target location, the first time information, the second time information, the third time information, and the like (for example, by receiving a message), the any plurality of pieces of information may be carried in different messages, or may be carried in a same message. This is not limited in this embodiment of this application.

In a possible design, the first core network device may determine, based on static configuration information, to perform the location management on the first terminal device. For example, one or more of the first information, the second information, the second location information, and the like are configured in the subscription data, and these pieces of information do not change (or do not change in a period of time). The first core network device determines, based on these pieces of information, to perform the location management on the first terminal device.

In another possible design, a network device (for example, the first service requester) may dynamically indicate the first core network device to perform the location management on the first terminal device.

In a possible example, the first core network device (for example, the AMF) may subscribe to a subscription data update notification from the second core network device (for example, the UDM or the UDR). The first service requester (for example, the AF) may update the subscription data of the first terminal device in the second core network device, so that a parameter (for example, the first information, the second information, the second location information, the first time information, or the second time information) related to the location management in the subscription data changes. After the subscription data of the first terminal device changes, the second core network device sends changed subscription data of the first terminal device to the first core network device, so that the first core network device determines, based on the changed subscription data of the first terminal device, to perform the location management on the first terminal device.

For example, the first terminal device does not need the location management initially, and the subscription data of the first terminal device does not include the first information and/or the second information. The AF sends a parameter provisioning message (for example, external parameter provisioning) (certainly, during actual application, the message may have another name, and this is not limited in this application) to the UDM via the NEF. The parameter provisioning message includes indication information (for example, the identifier of the first terminal device or an identifier of the AF) indicating that the location management needs to be performed on the first terminal device or the first service requester needs the location management. After receiving the parameter provisioning message, the UDM adds a related parameter, for example, the first information and/or the second information, to the subscription data of the first terminal device. The UDM sends changed subscription data (including the first information and/or the second information) to the AMF, so that the AMF can determine, based on the changed subscription data, to perform the location management on the first terminal device.

For example, the first terminal device is located in an area A, and the subscription data does not include the area that needs the location management. The AF sends the parameter provisioning message (certainly, during the actual application, the message may have the another name, and this is not limited in this application) to the UDM via the NEF. The parameter provisioning message includes location information of the area A, and indicates that the area A needs the location management (in other words, the location management needs to be performed on a terminal device in the area A). After receiving the parameter provisioning message, the UDM adds the location information of the area A to the subscription data of the first terminal device. The UDM sends changed subscription data (including the location information of the area A) to the AMF, so that the AMF can determine, based on the changed subscription data, to perform the location management on the first terminal device in the area A.

Optionally, the parameter provisioning message may include the terminal identifier of the first terminal device, and indicate to update the subscription data of the first terminal device. Further, optionally, the parameter provisioning message may include terminal identifiers of a plurality of terminal devices, and indicate to update subscription data of the plurality of terminal devices.

It may be understood that the foregoing is merely examples. Update content and an update manner of the subscription data are actually not limited thereto.

In another possible example, the first service requester may subscribe to location service management from the first core network device, for example, send the service subscription request message to the first core network device, where the service subscription request message includes one or more of the second location information (for example, the preset route), the first time information, and the like. After receiving the service subscription request message, the first core network device determines, based on content in the service subscription request message, to perform the location management on the first terminal device. Optionally, the service subscription request may further include indication information indicating the location management. The service subscription request may further include the terminal identifier of the first terminal device, indicating that subscription at this time is for the first terminal device, in other words, indicating that the location management needs to be performed on the first terminal device (equivalent to the first information). The service subscription request message may further include the identifier of the first service requester, indicating that subscription at this time is for the first service requester, in other words, indicating that the first service requester (or the terminal device managed by the first service requester) needs the location management (equivalent to the second information).

In some embodiments, the first service requester may indicate the first core network device to stop performing the location management on the first terminal device.

For example, the first service requester (for example, the AF) may send a third message (for example, a service unsubscription request message) to the first core network device, where the third message instructs to stop performing the location management on the first terminal device. After receiving the third message, the first core network device may send sixth information and/or seventh information to the first terminal device based on the third message, where the sixth information indicates the first terminal device to remove the area identity set, and the seventh information indicates that the first terminal device does not need to update the network on the location of the first terminal device (for example, does not need to perform the tracking area update procedure or does not need the mobility registration update procedure). After receiving the sixth information and/or the seventh information, the first terminal device removes the area identity set.

Optionally, the seventh information may be a default area identity or an area identity indicating a global location (for example, all areas served by the first core network device, or an entire network area (for example, the public network area or the non-public network area)), and the first terminal device further stores the area identity.

Subsequently, the first terminal device may determine, based on no area identity being locally stored, a locally stored area identity being the default area identity, or the area identity indicating the global location, that the location management does not need to be performed on the first terminal device, that is, does not need to update the network on the location of the first terminal device, for example, does not monitor the area identity in the cell broadcast message, or does not compare the area identity in the cell broadcast message with the area identity stored in the first terminal device.

For example, the first service requester (for example, the AF) may update the subscription data in the second core network device (for example, the AF sends indication information to the UDM or the UDR, to indicate the UDM or the UDR to delete the first information and/or the second information in the subscription data), and indicate, by using updated subscription data, the first core network device to stop performing the location management on the first terminal device.

Certainly, the foregoing is merely examples. This is actually not limited thereto.

In this way, the first core network device may stop, in time based on a requirement of the service requester, performing the location management on the first terminal device, so that a system resource can be saved.

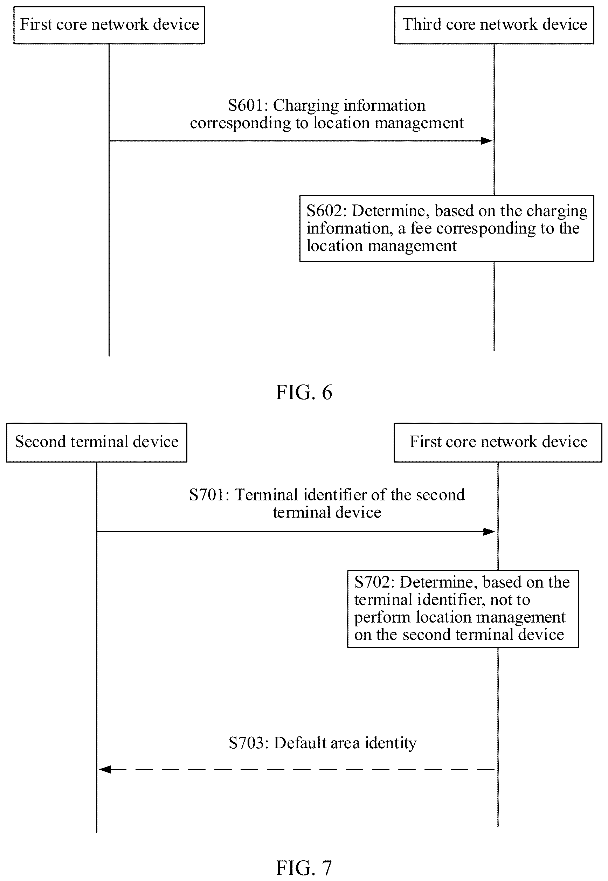

Refer to FIG. 6. An embodiment of this application further provides a location management method. The method includes the following steps.

S601: A first core network device sends charging information corresponding to location management, and a third core network device receives the charging information.

The third core network device is a device responsible for charging in a network, for example, a charging function (charging function, CHF) network element.

For example, the charging information includes but is not limited to one or more of the following:
(1) event type information, indicating an event corresponding to the location management;
(2) a quantity of area identities for performing the location management;
(3) duration of performing the location management;
(4) a quantity of times the location management is performed; and
(5) a quantity of terminal devices on which the location management is performed.

It may be understood that the charging information may be charging information corresponding to one or more terminal devices, or charging information corresponding to one or more service requesters. This is not limited in this application. The charging information may correspond to one or more times of location management, or correspond to location management in a period of time (for example, one month or one year). This is not limited in this application.

S602: The third core network device determines, based on the charging information, a fee corresponding to the location management.

After receiving the charging information, the third core network device may collect statistics on the fee, and may further generate a bill based on a fee statistics result.

In this embodiment of this application, when the location management is used as a service, the first core network device may send, to the third core network device, the charging information corresponding to the location management, so that the third core network device collects statistics on the fee, to implement paid use of the location management.

It may be understood that, the foregoing uses performing the location management on the terminal device (specifically, a first terminal device) as an example. During actual application, the location management may alternatively not be performed on the terminal device.

FIG. 7 is a flowchart of another location management method according to an embodiment of this application. The method includes the following steps.

S701: A first core network device obtains a terminal identifier of a second terminal device.

For example, the second terminal device sends the terminal identifier of the second terminal device, and the first core network device receives the terminal identifier of the second terminal device.

For a specific implementation of this step, refer to the specific implementation in which the first terminal device sends the terminal identifier of the first terminal device to the first core network device in S401. For example, the second terminal device sends a second registration request message to the first core network device via an access network device, where the second registration request message includes the terminal identifier of the second terminal device.

S702: The first core network device determines, based on the terminal identifier of the second terminal device, not to perform location management on the second terminal device.

For a specific implementation of this step, refer to the specific implementation in which the first core network device determines whether to perform the location management on the first terminal device in S402. A difference lies in different determining results. For example, in a possible design, the first core network device may determine, based on one or more of the following, not to perform the location management on the second terminal device: 1. The location management does not need to be performed on the second terminal device. 2. The second terminal device does not support the location management. 3. The second terminal device is not located in an area for performing the location management. 4. A current time point is not within a time period for performing the location management.

S703: The first core network device does not send an area identity set to a first terminal device (not shown in FIG. 7), or the first core network device sends a default area identity to a first terminal device.

For example, after authenticating and/or authorizing the second terminal device, the first core network device sends a second registration accept message to the second terminal device, where the second registration accept message indicates that the second terminal device is successfully registered, and an area identity in the second registration accept message is null, the default area identity, or an area identity indicating a global location. It may be understood that, that the area identity in the second registration accept message is null means that the second registration accept message includes no area identity.

Because the area identity in the second registration accept message is null or the default area identity, the location management may not need to be performed on the second terminal device. That is, the second terminal device does not need to update a network on a location of the second terminal device. Specifically, for example, the second terminal device does not monitor an area identity in a cell broadcast message, or does not compare the area identity in the cell broadcast message with an area identity stored in the second terminal device.

It may be understood that location management requirements of a same terminal device may vary with time. For example, the first terminal device and the second terminal device are a same terminal device, and the method procedure shown in FIG. 4 and the method procedure shown in FIG. 7 are asynchronously performed.

It may be understood that the foregoing implementations may be separately implemented, or may be implemented in combination with each other. To better understand the foregoing technical solutions, the following lists two examples of combined implementation.

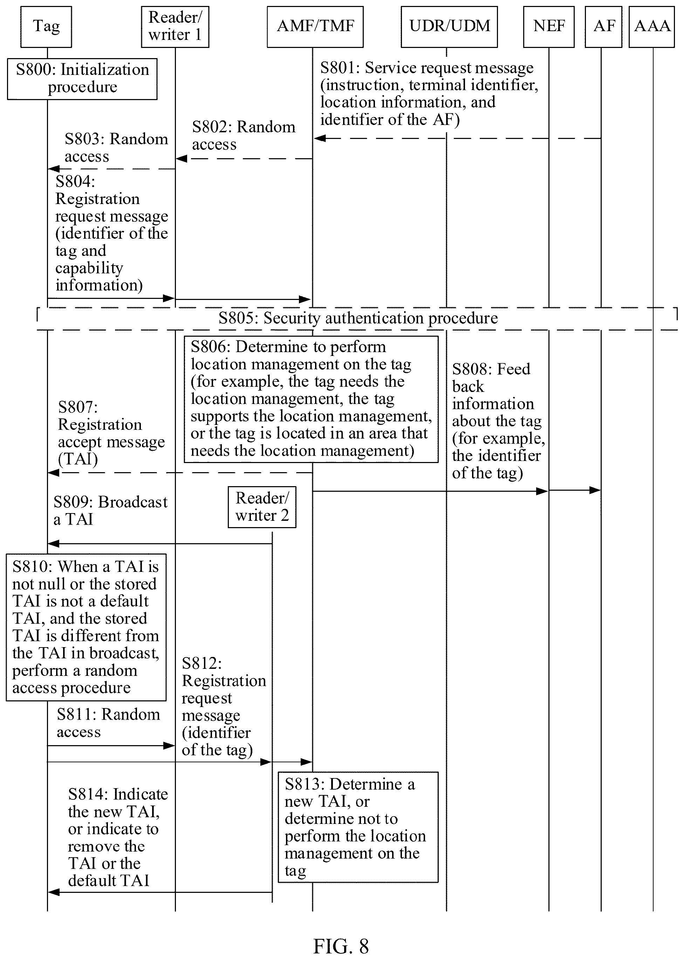

**Example 1:** **FIG. 8** is a flowchart of another location management method according to an embodiment of this application. In this example, an AMF or a TMF (denoted as the AMF/TMF) is used as an example of a first core network device, a UDM or a UDR (denoted as the UDM/UDR) is used as an example of a second core network device, an AF is used as an example of a first service requester, and a tag is used as an example of a first terminal device.

S800: Perform a tag initialization procedure.

For example, the initialization procedure is performed on the tag. For example, a tag printer writes identification information and configuration information to the tag. The configuration information may include one or more of capability information (for example, a terminal type (active, passive, semi-passive, or the like) and information indicating that location management is supported or not supported), a default area identity (for example, a default TAI), and the like. Optionally, the configuration information may be included in a terminal identifier. A function of the default TAI is indicating that mobility management does not need to be performed on the tag.

S801: The AF sends a service request message to the AMF/TMF via a NEF, where the service request message may include one or more of an instruction, the terminal identifier, location information, an identifier of the AF, and the like.

The instruction may include one or more of inventory, read, write, kill, position, and the like. The instruction indicates an operation that the AF requests to perform.

The terminal identifier indicates a target terminal corresponding to the instruction, namely, a terminal identifier of a terminal on which the operation needs to be performed. There may be one or more terminal identifiers (that is, performing of an operation on one or more terminals may be requested). The terminal identifier includes an identifier of the tag.

The location information indicates a location range for executing the instruction. That is, the operation is performed on a terminal within the location range. In a possible implementation, the location information may be one or more of geographical location information (for example, a coordinate value or longitude and latitude), a network identifier, a TAI, a cell identity, a CAG identifier, a reader/writer identifier, an access network device identifier, a user equipment identifier, and the like.

It may be understood that S801 is an optional step.

S802: The AMF/TMF indicates a current reader/writer (for example, a reader/writer 1) of the tag to execute a random access procedure.

The reader/writer may be an access network device, a user equipment, or the like. This is not limited.

In a possible implementation, the AMF/TMF may send, to the reader/writer, indication information for starting random access and a mask. The reader/writer may broadcast information about the mask in the random access procedure, to indicate a tag within coverage and a tag range of a current time of random access. The tag within the coverage determines, based on the broadcast information about the mask, whether to participate in the random access. For example, when the tag belongs to the tag range indicated by the mask, the tag may participate in the random access procedure. When the tag does not belong to the tag range indicated by the mask, the tag does not participate in the current time of random access procedure.

It may be understood that S802 is an optional step.

S803: The reader/writer 1 interacts with the tag, to complete the random access procedure.

In a possible implementation, in the random access procedure, the reader/writer sends a select (select) command, where the select command may include the information about the mask in step S802. After being excited, the tag obtains the information about the mask through monitoring. When the identifier of the tag belongs to the tag range indicated by the information about the mask, the tag may generate a random number. Subsequently, the reader/writer may periodically broadcast a query (Query) or query request (QueryRep) instruction. Each time the tag obtains one Query or QueryRep instruction through monitoring, the random number may be decreased by 1. When the random number is decreased to 0, the tag may send a 16-bit random number (referred to as an RN16) to the reader/writer. If there is no conflict (that is, no other tag sends the RN16 at a same moment), the reader/writer may correctly demodulate the random number RN16, and the reader/writer sends the RN16 to the tag, indicating that the RN16 is successfully received. After the tag correctly receives the RN16 from the reader/writer, step 4 is performed.

In another possible implementation, the reader/writer broadcasts a system message (for example, system information broadcast). The tag determines, based on the system message, to perform the random access procedure, and interacts with the reader/writer, to complete the random access procedure.

S804: After the random access succeeds, the tag may send the identifier of the tag to the AMF/TMF via the reader/writer, and the AMF/TMF receives the identifier of the tag.

It may be understood that, for a manner in which the AMF/TMF obtains the identifier of the tag in step S804, refer to the foregoing manner in which the first core network device obtains the terminal identifier of the first terminal device in S401. The manner is not limited to receiving the identifier of the tag via the reader/writer.

In a possible implementation, the tag may send a NAS message (for example, a registration request message) to the AMF/TMF via the reader/writer (for example, the access network device), where the NAS message includes the identifier of the tag.

Optionally, the NAS message may further carry the capability information.

In a possible implementation, the capability information indicates that the tag is one of a passive device (passive device), a semi-passive device (semi-passive device), and an active device (active device); the capability information indicates that the tag supports or does not support the location management; or the capability information indicates that the tag supports the location management (if the tag does not provide the capability information, it indicates that the tag does not support the location management).

It may be understood that, after the random access of the tag succeeds, if step 801 and step 802 are performed, the reader/writer (for example, the access network device) forwards, to the tag, an instruction sent by a core network. The tag obtains or sends corresponding information based on the instruction. For example, when the instruction is a stocktaking instruction or performing a stocktaking operation, the tag sends the identifier of the tag. When the instruction is a read instruction or performing a read operation, the tag sends data stored in a storage area of the tag. When the instruction is a write instruction or performing a write operation, the tag may store, in a storage area of the tag, data that is to be written to the tag and that is included in the instruction. The reader/writer sends (or forwards), to the core network, information sent by the tag. The core network sends the information to the AF.

S805: Optionally, a security authentication procedure is performed between the tag and a network.

Entities participating in a security procedure may include one or more of the tag, the AMF/TMF, an AUSF, the UDM, an authentication, authorization, and accounting (authentication, authorization, and accounting, AAA) server, and the like.

S806: The AMF/TMF determines whether to perform the location management on the tag.

It may be understood that, for specific implementation of step S807, refer to S402. For example, the AMF/TMF determines, based on any one or more of the following information, whether to perform the location management on the tag:

### A. Pre-configuration information of the AMF/TMF, or subscription data of the tags and/or the AF obtained from the UDM/UDR.

In a possible implementation, the pre-configuration information may include a terminal identifier list. When the terminal identifier list includes the identifier of the tag, the location management needs to be performed on the tag. Alternatively, the pre-configuration information includes a service requester list. When a service request message from a service requester (namely, the AF) included in the service requester list is received, it is determined that the location management needs to be performed on a terminal belonging to the service requester.

In another possible implementation, the UDM/UDR stores the subscription data of the tag. The subscription data includes indication information indicating whether the location management needs to be performed on the tag. Alternatively, the subscription data includes indication information (equivalent to the first information) indicating that the location management needs to be performed on the tag. It may be understood that if the subscription data does not include the indication information, it indicates that the location management does not need to be performed on the tag.

In another possible implementation, the UDM/UDR stores the AF, the corresponding subscription data, or a service profile of a passive internet of things service. The subscription data or the service profile includes a list of terminals (a terminal identifier list) on which the AF needs to perform the location management. Alternatively, the subscription data or the service profile includes indication information indicating whether the AF needs the location management. If the AF needs the location management, the location management needs to be performed on a terminal (for example, the tag) that belongs to the AF. Alternatively, if the subscription data or the service profile includes indication information (for example, second information) indicating that the AF needs to perform the location management, the location management needs to be performed on a terminal (for example, the tag) that belongs to the AF.

### B. Capability information of the tag.

For example, when the tag sends the capability information in S804, and the capability information indicates that the tag is a first-type terminal (for example, active), it is determined to perform the location management on the tag. If the capability information indicates that the tag is a second-type terminal (for example, passive or semi-passive), it is determined not to perform the location management on the tag. Alternatively, when the capability information indicates that the tag supports the location management, it is determined to perform the location management on the tag. When the capability information indicates that the tag does not support the location management, it is determined not to perform the location management on the tag.

### C. Location information sent by the AF or location information in the subscription data.

In a possible implementation, when an area indicated by the location information is a first-type area (equivalent to the area indicated by the second location information), the AMF/TMF needs to perform the location management. When an area indicated by the location information is a second-type area, the AMF/TMF does not perform the location management.

The first-type area indicates an area for performing the location management, for example, an area corresponding to a public network (a PLMN), or one or more of specific geographical location information (for example, a coordinate value or longitude and latitude), a network identifier (for example, a public network identifier PLMN), a TAI, a cell identity, a closed group identifier, a reader/writer identifier, an access network device identifier, and a user equipment identifier.

The second-type area indicates an area in which mobility management does not need to be performed, for example, an area corresponding to a non-public network, or one or more of specific geographical location information (for example, a coordinate value or longitude and latitude), a network identifier (for example, a non-public network identifier SNPN ID or a PLMN ID+a NID), a TAI, a cell identity, a closed group identifier, a reader/writer identifier, an access network device identifier, and a user equipment identifier.

S807: When determining to perform the location management on the tag, the AMF/TMF may include, in a message (for example, a NAS message or a registration accept message) to be sent to the tag, information for performing the location management.

It may be understood that, for specific implementation of step S807, refer to S404.

For example, the AMF/TMF may send an area identity (for example, a TAI, where there may be one or more TAIs) of a registration area to the tag, where a specific form may be an area identity set.

When the AMF/TMF determines not to perform the location management on the tag, the AMF/TMF does not need to send, to the tag, the information for performing the location management, for example, the TAI; or the AMF/TMF may send the default area identity (for example, the default TAI) to the terminal, to indicate that the location management does not need to be performed on the tag. For example, based on the default TAI, the tag does not need to monitor a TA broadcast by a base station (or the reader/writer), and does not need to perform a mobility registration update procedure (or a tracking area update procedure).

It may be understood that before sending the area identity set, the AMF/TMF needs to determine the area identity set. For specific implementation, refer to S403. Details are not described herein again.

S808: The AMF/TMF may feed back, to the AF, information about the tag on which the operation is performed, for example, the identifier of the tag.

S809: A reader/writer (for example, a reader/writer 2) periodically broadcasts, based on the configuration information, an area identity (for example, a TAI) corresponding to the reader/writer.

In a possible implementation, the reader/writer broadcasts a select command, where the select command includes TA information, indicating that the tag needs to compare the TAI in broadcast with a TAI stored in the tag. If the TAI in the broadcast is different from the TAI stored in the tag, the tag needs to perform the random access procedure.

S810: When the tag stores the TAI (that is, the TAI is not null) or the TAI stored in the tag is not the default TAI, and the TAI stored in the tag is different from the TAI in a broadcast message, the tag performs the random access procedure, and performs step S811.

S811: The tag performs the random access procedure. For details, refer to the descriptions of step S803.

S812: After the random access of the tag succeeds, send the identifier of the tag to the AMF/TMF via the new reader/writer (for example, the reader/writer 2). For details, refer to the descriptions of step S804.

Optionally, the tag may further send the previously stored TAI. In an example, the tag may use the registration request message to carry information such as the identifier of the tag and the TAI.

S813: The AMF/TMF determines a new TAI for the tag, or the AMF/TMF determines, based on the configuration information or the subscription data, not to perform the location management on the tag.

It may be understood that, for determining, by the AMF/TMF based on the configuration information or the subscription data, not to perform the location management on the tag, refer to the foregoing step S702. S814: The AMF/TMF sends indication information to the tag, to indicate the new TAI, indicate to remove the TAI9 previously stored in the tag, or indicate to update the TAI stored in the tag to the default TAI.

It may be understood that, for step S814, refer to the specific descriptions of the foregoing step S703.

According to the foregoing solution, the AMF/TMF may determine, based on the pre-configuration information, the subscription data, the service profile, or the like, whether to perform the location management on the terminal. When the location management needs to be performed on the terminal, the information (for example, the TAI) for performing the location management is written to the terminal. In this way, the core network may perform the location management on only a part of terminals, so that costs of maintaining a terminal context by the network can be reduced, the location management can be performed on demand, signaling overheads can be reduced, and communication efficiency can be improved.

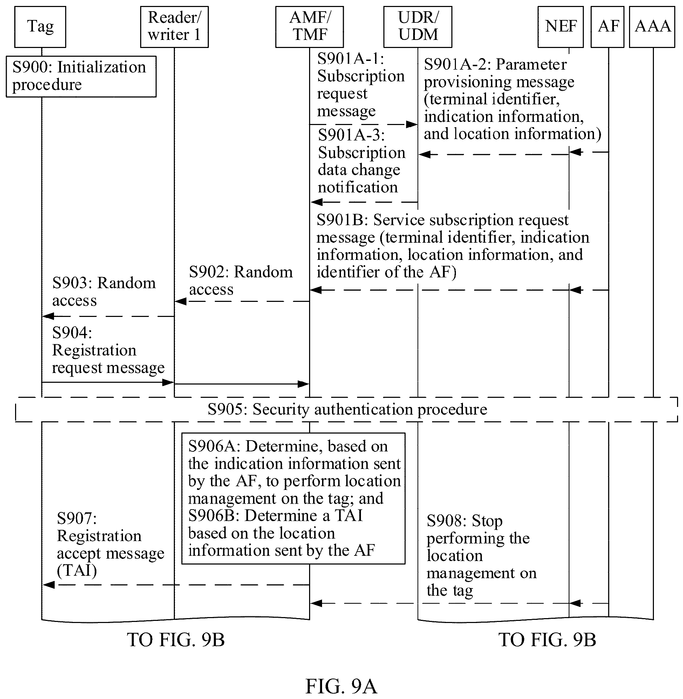

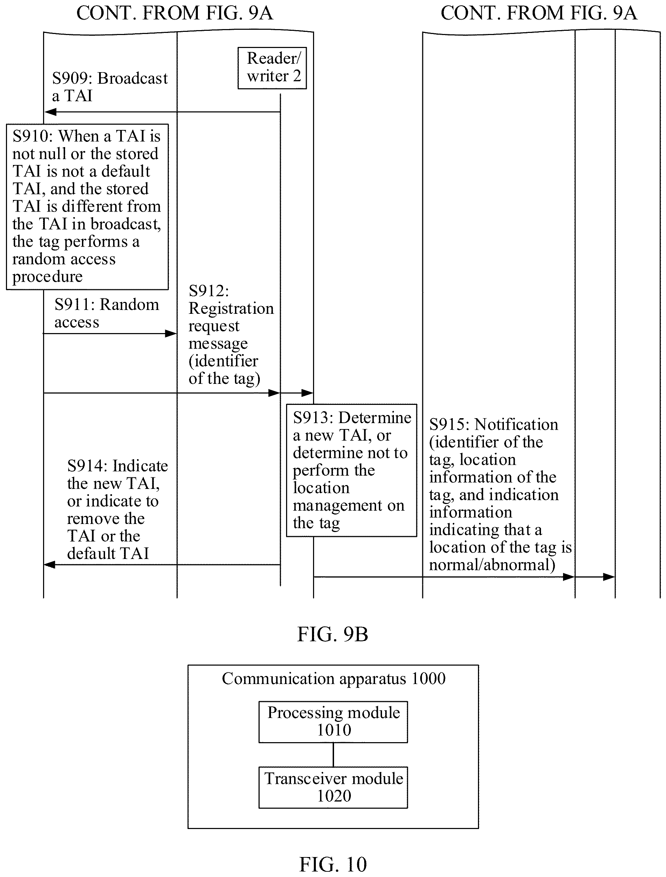

**Example 2:** **FIG. 9A** **and** **FIG. 9B** are a flowchart of another location management method according to an embodiment of this application. In this example, an AMF or a TMF (denoted as the AMF/TMF) is used as an example of a first core network device, a UDM or a UDR (denoted as the UDM/UDR) is used as an example of a second core network device, an AF is used as an example of a first service requester, and a tag is used as an example of a terminal device.

S900: Perform a tag initialization procedure.

For specific implementation, refer to S800. Details are not described herein again.

S901: The AF indicates a core network to perform location management.

Two manners are listed herein:
Manner 1: The AF updates the UDM on subscription data via a NEF, and indicates, based on subscription data, the AMF/TMF to perform the location management on the tag.

For example:
S901A-1: The AMF/TMF may send a subscription request message to the UDM, to subscribe to a subscription data update notification from the UDM, so that when subscription data corresponding to the tag and/or the AF in the UDM/UDR is updated, the UDM/UDR can send the subscription data change notification to the AMF/TMF, where the notification carries the changed subscription data.

S901A-2: The AF may send a parameter provisioning message to the UDM/UDR via the NEF, where the message carries indication information (equivalent to the second information), and the indication information indicates to perform the location management on a terminal device (including the tag) that belongs to the AF.

Optionally, the message may further include one or more terminal identifiers (including an identifier of the tag) and/or location information. When the message includes the one or more terminal identifiers, the indication information may also indicate to perform the location management on one or more terminal devices (equivalent to the first information). When the message includes the location information (equivalent to the second location information), the indication information may indicate to perform the location management on a terminal device located within a range corresponding to the location information. When the message includes the terminal identifier and the location information, the indication information may indicate to perform the location management on one or more terminal devices within a range corresponding to the location information.

S901A-3: The UDM/UDR updates, based on the parameter provisioning message, the subscription data corresponding to the tag and/or the AF, and sends the subscription data change notification to the AMF/TMF, where the notification carries the changed subscription data.

Manner 2: S901B: The AF indicates, by delivering an instruction or subscribing to a location management service (also referred to as a location tracking service or another name), to perform the location management on the tag.

In a possible implementation, the AF sends a request message (for example, an instruction message, a location tracking service subscription message, or a location management service subscription request message) to the AMF/TMF via a NEF. In FIG. 9A, a service subscription request message is used as an example.

The message may include a terminal identifier, indication information (indicating to perform the location management, and equivalent to the first information), location information (optionally, the location information may be a preset route), and an identifier of the AF. Optionally, the message may further include time information.

The terminal identifier indicates a terminal identifier of a terminal on which an operation needs to be performed. The location information indicates a location range for executing the instruction.

In a possible implementation, the location information further indicates a location range for performing the location management (equivalent to the second location information), or the location information (for example, the preset route) indicates a given route trajectory (equivalent to the preset route) of movement of the tag.

In a possible implementation, the location information may be one or more of geographical location information (for example, a coordinate value or longitude and latitude), a network identifier, a TAI, a cell identity, a CAG identifier, a reader/writer identifier, an access network device identifier, a user equipment identifier, and the like.

In a possible implementation, the location information may include a target location, and indicates a location at which the tag needs to arrive.

In a possible implementation, the time information may include one or more of a start time point, duration, and an end time point, and indicate a time period for performing the location management or the location management (equivalent to the first time information).

In a possible implementation, the time information further includes information indicating a time point of arriving at the target location (equivalent to the second time information).

S902: The AMF/TMF indicates a current reader/writer (for example, a reader/writer 1) of the tag to execute a random access procedure.

For specific implementation, refer to S802. Details are not described herein again.

S903: The reader/writer interacts with the tag, to complete the random access procedure.

For specific implementation, refer to S803. Details are not described herein again.

S904: After random access succeeds, the tag may send the identifier of the tag to the AMF/TMF via the reader/writer.

For specific implementation of step S904, refer to S804 or S401. Details are not described herein again.

For specific implementation of S905, refer to S805. Details are not described herein again.

S906A: The AMF/TMF determines, based on information provided by the AF, to perform the location management.

For specific implementation of step S906A, refer to S402. For example:

In a possible implementation, when the AF updates, via the NEF, the UDM on the subscription data of the tag or the subscription data corresponding to the AF (or a service profile corresponding to a passive internet of things service), the UDM sends the updated subscription data (or a service profile corresponding to the passive internet of things service) to the AMF/TMF (for example, step S901A-3), so that the AMF/TMF can determine, based on the updated subscription data (or the service profile) sent by the UDM, to perform the location management on the tag.

In another possible implementation, when the AF subscribes to the location tracking service for the tag from the AMF/TMF (for example, in step S901B, the AF sends the service subscription request message to the AMF/TMF), the AMF/TMF may determine, based on information (for example, the identifier of the tag, the identifier of the AF, the indication information, or the location information) carried in the service subscription request message sent by the AF, to perform the location management on the tag.

Optionally, when the information provided by the AF further includes the time information indicating the time period for performing the location management, the AMF/TMF may determine whether a current time point belongs to a time range indicated by the time information, thereby determining whether to start or continue to perform the location management on the tag.

Optionally, when the information provided by the AF includes the location information, the AMF/TMF may determine whether the tag is located in an area indicated by the location information, thereby determining whether the location management needs to be performed on the tag (for example, the location management is performed on the tag only when the tag is located at the area indicated by the location information).

Optionally, the AMF/TMF may further determine, based on capability information of the tag, whether the location management needs to be performed on the tag. For example, the location management is performed on the tag only when the tags support the location management.

S906B: The AMF/TMF determines the TAI based on the location information.

For specific implementation of step S906B, refer to S403. In a possible implementation, the AMF/TMF determines, based on the location information provided by the AF, the TAI that needs to be sent to the tag.

S907: When determining to perform the location management on the tag, the AMF/TMF includes, in a message (for example, a NAS message or a registration accept message) to be sent to the tag, information (for example, the TAI) for performing the location management.

For specific implementation of step S907, refer to S404. For example:
When the AMF/TMF determines not to perform the location management on the tag, the AMF/TMF may not need to send, to the tag, the information for performing the location management; or the AMF/TMF may send a default TAI to the tag, to indicate that the location management does not need to be performed on the tag. Specifically, after receiving the default TAI, the tag may determine, based on the default TAI, that the tag does not need to monitor a TAI broadcast by a reader/writer and does not need to perform a mobility registration update procedure (or a tracking area update procedure).

Optionally, S908: When the AF does not need to perform the location management on the tag, the AF may further indicate the AMF/TMF to stop performing the location management on the tag.

For specific implementation of step S908, refer to the specific implementation in which the first service requester indicates the first core network device to stop performing the location management on the first terminal device. For example, the AF may send a service unsubscription request message to the AMF/TMF, to indicate the AMF/TMF to stop performing the location management on the tag. Alternatively, the AF may update the UDM/UDR on the subscription data corresponding to the tag or the AF, or update the service profile of the passive internet of things service, and indicate, based on the updated subscription data or service profile, that the AMF/TMF does not need to perform the location management on the tag.

S909: A reader/writer periodically broadcasts a TAI based on configuration information.

For specific implementation, refer to S809. Details are not described herein again.

S910: When the tag stores a TAI (that is, the TAI is not null) or the TAI stored in the tag is not the default TAI, and the TAI stored in the tag is different from the TAI in a broadcast message, the tag performs the random access procedure, and performs step S911.

S911: The tag performs the random access procedure.

S912: After random access of the tag succeeds, the tag sends the identifier of the tag to the AMF/TMF via the new reader/writer (for example, a reader/writer 2). For details, refer to the descriptions of step S812.

S913: The AMF/TMF determines a new TAI for the tag, or the AMF/TMF determines, based on the configuration information or the subscription data, not to perform the location management on the tag. For details, refer to the descriptions of step S813.

S914: The AMF/TMF sends indication information to the tag, to indicate the new TAI, indicate the tag to remove the TAI previously stored in the tag, or indicate the tag to update the stored TAI to the default TAI. For details, refer to the descriptions of step S814.

Optionally, S915: The AMF/TMF may send a notification message to the AF via the NEF, where the notification message may include the identifier of the tag, location information of the tag, and indication information indicating that a location of the tag is normal or abnormal.

The location information of the tag may be one or more of geographical location information (for example, a coordinate value or longitude and latitude), a network identifier, a TAI, a cell identity, a closed group identifier, a reader/writer identifier, an access network device identifier, a user equipment identifier, and the like.

For example, when the information provided by the AF in step S901 includes the preset route, and the location of the tag belongs to the preset route, the AMF/TMF may send normality indication information to the AF, to indicate that a movement trajectory or the location of the tag currently conforms to the given route. When the location of the tag does not belong to or deviates from the preset route, the AMF/TMF may send abnormality indication information to the AF, to indicate that a movement trajectory or the location of the tag currently does not conform to the given route.

For example, when the information provided by the AF in S901 includes the target location and the information indicating the time point of arriving at the target location, the AMF/TMF may obtain a system time point and the location of the tag, and determine whether the tag arrives at the target location on time. If the tag does not arrive at the target location on time, the AMF/TMF may send the abnormality indication information to the AF, to indicate that the tag does not move based on the given route.

For example, the AMF is further configured with timer duration (equivalent to the third time information). When the tag is located at a same location for a long period of time (for example, more than the timer duration) (for example, the tag is inventoried by a same reader/writer), the abnormality indication information may be sent to the AF, to indicate that the location of the tag is abnormal. Optionally, the timer duration may be provided by the AF.

In the foregoing solution, the AF may dynamically indicate, based on a service-oriented interface message, the core network to perform the location management on the tag. In this way, the core network performs the location management on the tag on demand based on an indication of the AF instead of performing the location management on all terminals at all locations in all time periods, so that flexibility of terminal location management is improved, and costs are reduced.

The following describes, with reference to the accompanying drawings, communication apparatuses for implementing the foregoing methods in embodiments of this application. Therefore, all the foregoing content may be used in the following embodiments. Repeated content is not described again.

FIG. 10 is a schematic block diagram of a communication apparatus 1000 according to an embodiment of this application. The communication apparatus 1000 may correspondingly implement the functions or the steps implemented by any device, network element, terminal, or requester in any one of the foregoing method embodiments. The communication apparatus may include a processing module 1010 and a transceiver module 1020. Optionally, the communication apparatus 1000 may further include a storage module, and the storage module may be configured to store instructions (code or a program) and/or data. The processing module 1010 and the transceiver module 1020 may be coupled to the storage module. For example, the processing module 1010 may read the instructions (the code or the program) and/or the data in the storage module, to implement the corresponding methods. The foregoing modules may be independently disposed, or may be partially or completely integrated.

It should be understood that the processing module 1010 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described based on content disclosed in this application. Alternatively, the processor may be a combination for implementing a computing function, for example, a combination of one or more microprocessors or a combination of a DSP and a microprocessor. The transceiver module 1020 is an interface circuit of the apparatus, and is configured to receive a signal from another apparatus. For example, when the apparatus is implemented in a form of a chip, the transceiver module 1020 is an interface circuit used by the chip to receive a signal from another chip or apparatus, or is an interface circuit used by the chip to send a signal to the another chip or apparatus.

In an example, when the communication apparatus 1000 is a first core network device or a component used in the first core network device, the transceiver module 1020 is configured to obtain a terminal identifier of a first terminal device; the processing module 1010 is configured to: determine, based on the terminal identifier, to perform location management on the first terminal device; and determine an area identity set for performing the location management; and the transceiver module 1020 is further configured to send the area identity set to the first terminal device.

Alternatively, when the communication apparatus 1000 is a first core network device or a component used in the first core network device, the transceiver module 1020 is configured to receive a second registration request message from a second terminal device, where the second registration request message includes a terminal identifier of the second terminal device; the processing module 1010 is configured to determine, based on the terminal identifier of the second terminal device, not to perform location management on the second terminal device; and the transceiver module 1020 is further configured to send a second registration accept message to the second terminal device, where the second registration accept message indicates that the second terminal device is successfully registered, and an area identity in the second registration accept message is null or a default area identity.

In an example, when the communication apparatus 1000 is a first service requester or a component used in the first service requester, the processing module 1010 is configured to determine a second message, where the second message includes first information and/or second information, the first information indicates that location management needs to be performed on a first terminal device, the second information indicates that the first service requester requests the location management, and the first service requester is a service requester that manages the first terminal device; and the transceiver module 1020 is configured to send the second message to a first core network device.

In an example, when the communication apparatus 1000 is a second terminal device or a component used in the second terminal device, the transceiver module 1020 is configured to: send a second registration request message to a first core network device, where the second registration request message includes a terminal identifier of the second terminal device; and receive a second registration accept message from the first core network device, where the second registration accept message indicates that the second terminal device is successfully registered, and an area identity in the second registration accept message is null or a default area identity; and the processing module 1010 is configured to determine, based on a locally stored area identity being null or the default area identity, that an area identity in a cell broadcast message does not need to be monitored or a mobility registration update procedure does not need to be performed.

It should be understood that the processing unit 1010 in this embodiment of this application may be implemented by a processor or a processor-related circuit component, and the transceiver unit 1020 may be implemented by a transceiver, a transceiver-related circuit component, or a communication interface.

It should be understood that all related content of the steps in the foregoing method embodiments may be cited in function descriptions of the corresponding functional modules. Details are not described herein again.

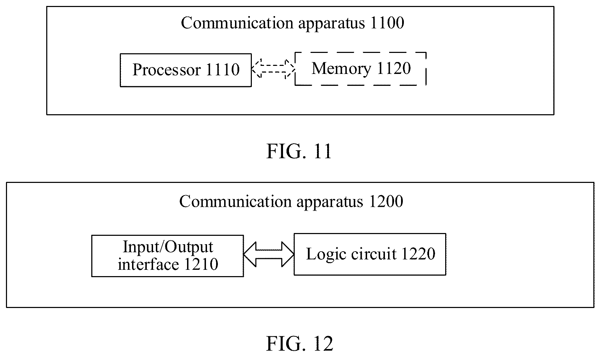

Based on a same concept, as shown in FIG. 11, an embodiment of this application provides a communication apparatus 1100. The communication apparatus 1100 includes a processor 1110. Optionally, the communication apparatus 1100 may further include a memory 1120, configured to store instructions executed by the processor 1110, input data needed by the processor 1110 to run the instructions, or data generated by running the instructions by the processor 1110. The processor 1110 may implement the methods shown in the foregoing method embodiments by using the instructions stored in the memory 1120.

The memory 1120 may be a storage unit of a chip inside the communication apparatus 1100, for example, a register or a cache. Alternatively, the storage unit may be a storage unit that is inside the communication apparatus 1100 and that is located outside the chip, for example, a read-only memory (read-only memory, ROM) or another type of static storage device that can store static information and instructions, or a random access memory (random access memory, RAM).

Optionally, the memory 1120 may be located inside the apparatus, or may be located outside the apparatus. The processor 1110 is coupled to the memory 1120. Coupling in embodiments of this application may be indirect coupling or a communication connection between apparatuses, units, or modules, may be in an electrical form, a mechanical form, or another form, and is for information exchange between the apparatuses, the units, or the modules. The processor 1110 may operate in cooperation with the memory 1120.

The communication apparatus 1100 may be a chip or a chip system. Optionally, in this embodiment of this application, the chip system may include a chip, or may include the chip and another discrete device.

Refer to FIG. 12. Based on the foregoing embodiments, an embodiment of this application further provides another communication apparatus 1200, including an input/output interface 1210 and a logic circuit 1220. The input/output interface 1210 is configured to: receive code instructions and transmit the code instructions to the logic circuit 1220. The logic circuit 1220 is configured to run the code instructions to perform the method performed by any device, network element, terminal, or requester in any one of the foregoing embodiments.

An embodiment of this application further provides a computer-readable storage medium, including instructions. When the instructions are run on a computer, the computer is enabled to perform the method performed by any device, network element, terminal, or requester in any one of the foregoing embodiments.

An embodiment of this application further provides a computer program product, including instructions. When the instructions are run on a computer, the computer is enabled to perform the method performed by any device, network element, terminal, or requester in any one of the foregoing embodiments.

A person of ordinary skill in the art may be aware that, with reference to various illustrative logical blocks (illustrative logical blocks) and steps (steps) described in embodiments disclosed in this specification, embodiments of this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate components may or may not be physically separate, and components displayed as units may or may not be physical units, that is, may be located at one location, or may be distributed on a plurality of network units. Some or all of the units may be selected based on actual requirements to achieve the objectives of the solutions in embodiments.

When the functions are implemented in the form of a software functional unit and sold or used as an independent product, the functions may be stored in a computer-readable storage medium. Based on such an understanding, the technical solutions in this application essentially, the part contributing, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A location management method, applied to a first core network device, wherein the method comprises:
obtaining a terminal identifier of a first terminal device, and determining, based on the terminal identifier, to perform location management on the first terminal device;
determining an area identity set for performing the location management; and
sending the area identity set to the first terminal device.

2. The method according to claim 1, wherein the determining, based on the terminal identifier, to perform the location management on the first terminal device comprises:
obtaining subscription data of the first terminal device from a second core network device based on the terminal identifier, wherein the subscription data comprises at least one of first information, second information, or capability information of the terminal device, the first information indicates that the location management needs to be performed on the first terminal device, the second information indicates that the first service requester needs the location management, the first service requester is a service requester that manages the first terminal device, and the capability information of the first terminal device indicates that the first terminal device supports the location management; and
determining, based on the subscription data, to perform the location management on the first terminal device.

3. The method according to claim 1, wherein the obtaining the terminal identifier of the first terminal device comprises:
receiving a first message, wherein the first message comprises the terminal identifier of the first terminal device and capability information of the first terminal device, and the capability information of the first terminal device indicates that the first terminal device supports the location management; and
the determining, based on the terminal identifier, to perform the location management on the first terminal device comprises:
obtaining subscription data of the first terminal device from a second core network device based on the terminal identifier, wherein the subscription data comprises first information and/or second information, the first information indicates that the location management needs to be performed on the first terminal device, the second information indicates that the first service requester needs the location management, and the first service requester is a service requester that manages the first terminal device; and
determining, based on the subscription data and the capability information of the first terminal device, to perform the location management on the first terminal device.

4. The method according to claim 1, wherein the obtaining the terminal identifier of the first terminal device comprises:
receiving a first message, wherein the first message comprises the terminal identifier of the first terminal device and capability information of the first terminal device, and the capability information of the first terminal device indicates that the first terminal device supports the location management; and
the determining, based on the terminal identifier, to perform the location management on the first terminal device comprises:
determining, based on the terminal identifier and the capability information of the first terminal device, to perform the location management on the first terminal device.

5. The method according to claim 3 or 4, wherein the first message is a first registration request message; and
the sending the area identity set to the first terminal device comprises:
sending a first registration accept message to the first terminal device, wherein the first registration accept message indicates that the first terminal device is successfully registered, the first registration accept message comprises the area identity set, and an area indicated by the area identity set is a registration area allocated by the first core network device to the first terminal device.

6. The method according to claim 1, wherein before the determining, based on the terminal identifier, to perform the location management on the first terminal device, the method further comprises:
obtaining information locally configured in the first core network device, wherein the information configured locally in the first core network device comprises at least one of a terminal device list, a service requester list, and capability information of the first terminal device, the terminal device list indicates a terminal device on which the location management needs to be performed, the terminal device list comprises the terminal identifier of the first terminal device, the service requester list indicates a service requester that needs the location management, the service requester list comprises an identifier of a first service requester, the first service requester is a service requester that manages the first terminal device, and the capability information of the first terminal device indicates that the first terminal device supports the location management; and
the determining, based on the terminal identifier, to perform the location management on the first terminal device comprises:
determining, based on the terminal identifier and the information locally configured in the first core network device, to perform the location management on the first terminal device.

7. The method according to claim 1, wherein before the determining, based on the terminal identifier, to perform the location management on the first terminal device, the method further comprises:
receiving a second message from a first service requester, wherein the second message comprises first information and/or second information, the first information indicates that the location management needs to be performed on the first terminal device, the second information indicates that the first service requester requests the location management, and the first service requester is a service requester that manages the first terminal device; and
the determining, based on the terminal identifier, to perform the location management on the first terminal device comprises:
determining, based on the terminal identifier, and the first information and/or the second information, to perform the location management on the first terminal device.

8. The method according to any one of claims 1 to 7, wherein the method further comprises:
obtaining second location information, wherein the second location information indicates an area for performing the location management;
the obtaining the terminal identifier of the first terminal device comprises:
receiving the terminal identifier of the first terminal device from a first access network device; and
the determining, based on the terminal identifier, to perform the location management on the first terminal device further comprises:
determining first location information based on location information of the first access network device, wherein the first location information indicates an area in which the first terminal device is located; and
determining, based on the first location information and the second location information, that the first terminal device is located in the area for performing the location management.

9. The method according to any one of claims 1 to 8, wherein the method further comprises:
obtaining a preset route of the first terminal device; and
the determining the area identity set for performing the location management comprises:
determining, based on an area that covers a part or all of the preset route, the area identity set for performing the location management, wherein the area identity set comprises an area identity of the area that covers the part or all of the preset route.

10. The method according to claim 9, wherein the method further comprises:
receiving the terminal identifier of the first terminal device from a second access network device;
determining, based on location information of the second access network device, the area in which the first terminal device is located;
if the area in which the first terminal device is located does not belong to an area on the preset route, determining that the first terminal device deviates from the preset route; and
sending third information to the first service requester, wherein the third information indicates that a location of the first terminal device is abnormal, and the first service requester is the service requester that manages the first terminal device.

11. The method according to any one of claims 1 to 10, wherein the method further comprises:
obtaining first time information, wherein the first time information indicates a time period for performing the location management; and
the determining, based on the terminal identifier, to perform the location management on the first terminal device further comprises:
determining, based on the terminal identifier when a current time point is within the time period indicated by the first time information, to perform the location management on the first terminal device.

12. The method according to any one of claims 1 to 11, wherein the method further comprises:
obtaining location information of a target location and second time information, wherein the second time information indicates a time point at which the first terminal device arrives at the target location;
determining whether the first terminal device arrives at the target location by the time point indicated by the second time information; and
if the first terminal device does not arrive at the target location by the time point indicated by the second time information, sending fourth information to the first service requester, wherein the fourth information indicates that the location of the first terminal device is abnormal, and the first service requester is the service requester that manages the first terminal device.

13. The method according to claim 12, wherein
the determining whether the first terminal device arrives at the target location by the time point indicated by the second time information comprises: sending paging information to one or more access network devices by the time point indicated by the second time information, wherein the paging information indicates to page the first terminal device, and the paging information comprises the terminal identifier of the first terminal device; receiving the terminal identifier of the first terminal device from a third access network device, and determining that the first terminal device is located in an area corresponding to location information of the third access network device; and determining, based on the location information of the third access network device and the location information of the target location, whether the first terminal device arrives at the target location by the time point indicated by the second time information;
the determining whether the first terminal device arrives at the target location by the time point indicated by the second time information comprises: sending, by the time point indicated by the second time information, paging information to one or more access network devices corresponding to the target location, wherein the paging information indicates to page the first terminal device, and the paging information comprises the terminal identifier of the first terminal device; and determining, depending on whether the terminal identifier of the first terminal device is received from any one of the one or more access network devices corresponding to the target location, whether the first terminal device arrives at the target location by the time point indicated by the second time information; or
the area identity set does not comprise an area identity of an area that covers the target location; and the determining whether the first terminal device arrives at the target location by the time point indicated by the second time information comprises: receiving the terminal identifier of the first terminal device from a third access network device; determining, based on location information of the third access network device, that the area in which the first terminal device is located is the area that covers the target location; and determining, based on the current time point and the second time information, whether the first terminal device arrives at the target location by the time point indicated by the second time information.

14. The method according to any one of claims 1 to 13, wherein the method further comprises:
obtaining third time information, wherein the third time information indicates preset duration;
determining that the first terminal device is located at a same location for more than the preset duration; and
sending fifth information to the first service requester, wherein the fifth information indicates that the location of the first terminal device is abnormal, and the first service requester is the service requester that manages the first terminal device.

15. The method according to claim 14, wherein
the determining that the first terminal device is located at the same location for more than the preset duration comprises: sending the paging information to the one or more access network devices, wherein the paging information is for paging the first terminal device, and the paging information comprises the terminal identifier of the first terminal device; and if duration of receiving the terminal identifier of the first terminal device from a same access network device a plurality of consecutive times exceeds the preset duration, determining that the first terminal device is located at the same location for more than the preset duration;
the determining that the first terminal device is located at the same location for more than the preset duration comprises: periodically sending the paging information to the one or more access network devices based on the preset duration, wherein the paging information is for paging the first terminal device, and the paging information comprises the terminal identifier of the first terminal device; and if the terminal identifier of the first terminal device is received from a same access network device a plurality of times, determining that the first terminal device is located at the same location for more than the preset duration; or
the area identity set comprises an area identity of an area that covers the part of the preset route; and the determining that the first terminal device is located at the same location for more than the preset duration comprises: if for more than the preset duration, the terminal identifier of the first terminal device is not received from any access network device outside the area represented by the area identity set, determining that the first terminal device is located at the same location for more than the preset duration.

16. The method according to claim 7, wherein the second message is a service subscription request message, and the service subscription request message indicates the first core network device to provide a location management service for the first terminal device or a terminal device managed by the first service requester.

17. The method according to any one of claims 1 to 16, wherein the method further comprises:
sending, to a third core network device, charging information corresponding to the location management, wherein
the charging information comprises at least one of the following:
event type information, indicating an event corresponding to the location management;
a quantity of area identities for performing the location management;
duration of performing the location management;
a quantity of times the location management is performed; and
a quantity of terminal devices on which the location management is performed.

18. The method according to any one of claims 1 to 17, wherein the method further comprises:
receiving a third message from the first service requester, wherein the third message indicates to stop performing the location management on the first terminal device; and
sending sixth information and/or seventh information to the first terminal device based on the third message, wherein the sixth information indicates the first terminal device to remove the area identity set, and the seventh information indicates that the first terminal device does not need to update a network on the location of the first terminal device.

19. The method according to any one of claims 1 to 18, wherein the method further comprises:
receiving a second registration request message from a second terminal device, wherein the second registration request message comprises a terminal identifier of the second terminal device;
determining, based on the terminal identifier of the second terminal device, not to perform the location management on the second terminal device; and
sending a second registration accept message to the second terminal device, wherein the second registration accept message indicates that the second terminal device is successfully registered, and an area identity in the second registration accept message is null or a default area identity.

20. A location management method, applied to a first core network device, and comprising:
receiving a second registration request message from a second terminal device, wherein the second registration request message comprises a terminal identifier of the second terminal device;
determining, based on the terminal identifier of the second terminal device, not to perform location management on the second terminal device; and
sending a second registration accept message to the second terminal device, wherein the second registration accept message indicates that the second terminal device is successfully registered, and an area identity in the second registration accept message is null or a default area identity.

21. A location management method, applied to a first service requester, wherein the method comprises:
determining a second message, wherein the second message comprises first information and/or second information, the first information indicates that the location management needs to be performed on a first terminal device, the second information indicates that the first service requester requests the location management, and the first service requester is a service requester that manages the first terminal device; and
sending the second message to a first core network device.

22. The method according to claim 21, wherein the second message further comprises one or more of the following:
second location information, wherein the second location information indicates an area for performing the location management;
a preset route of the first terminal device;
first time information, wherein the first time information indicates a time period for performing the location management;
location information of a target location and second time information, wherein the second time information indicates a time point at which the first terminal device arrives at the target location; and
third time information, wherein the third time information indicates preset duration.

23. The method according to claim 22, wherein the method further comprises:
receiving third information, fourth information, or fifth information from the first core network device, wherein the third information, the fourth information, or the fifth information indicates that a location of the first terminal device is abnormal.

24. The method according to any one of claims 21 to 23, wherein the second message is a service subscription request message, and the service subscription request message indicates the first core network device to provide a location management service for the first terminal device or a terminal device managed by the first service requester.

25. The method according to any one of claims 21 to 24, wherein the method further comprises:
sending a third message to the first core network device, wherein the third message indicates to stop performing the location management on the first terminal device.

26. A location management method, applied to a second terminal device, wherein the method comprises:
sending a second registration request message to a first core network device, wherein the second registration request message comprises a terminal identifier of the second terminal device;
receiving a second registration accept message from the first core network device, wherein the second registration accept message indicates that the second terminal device is successfully registered, and an area identity in the second registration accept message is null or a default area identity; and
determining, based on a locally stored area identity being null or the default area identity, that an area identity in a cell broadcast message does not need to be monitored or a mobility registration update procedure does not need to be performed.

27. A communication apparatus, comprising a module configured to perform the method according to any one of claims 1 to 19, comprising a module configured to perform the method according to claim 20, comprising a module configured to perform the method according to any one of claims 21 to 25, or comprising a module configured to perform the method according to claim 26.

28. A communication apparatus, wherein the communication apparatus comprises a processor, and the processor is configured to perform the method according to any one of claims 1 to 19, the method according to claim 20, the method according to any one of claims 21 to 25, or the method according to claim 26.

29. A computer-readable storage medium, wherein the computer-readable storage medium comprises instructions; and when the instructions are run by a processor, the method according to any one of claims 1 to 19, the method according to claim 20, the method according to any one of claims 21 to 25, or the method according to claim 26 is enabled to be implemented.

30. A computer program product, wherein the computer program product comprises instructions; and when the instructions are run by a processor, the method according to any one of claims 1 to 19, the method according to claim 20, the method according to any one of claims 21 to 25, or the method according to claim 26 is enabled to be implemented.
